(19) Europäisches Patentamt
European Patent Office
Office européen des brevets

(11) EP 0 866 081 A1

(12) **EUROPEAN PATENT APPLICATION**
published in accordance with Art. 158(3) EPC

(43) Date of publication:
**23.09.1998 Bulletin 1998/39**

(21) Application number: **96941202.2**

(22) Date of filing: **06.12.1996**

(51) Int. Cl.$^6$: **C08F 255/00**, C08F 279/00, C08L 51/00, C08L 51/04, C08L 23/00, C08L 67/00, C08L 69/00, C08L 77/00

(86) International application number:
**PCT/JP96/03591**

(87) International publication number:
**WO 97/21745 (19.06.1997 Gazette 1997/26)**

(84) Designated Contracting States:
**BE DE FR GB IT NL**

(30) Priority: **08.12.1995 JP 345801/95**
**22.12.1995 JP 350635/95**

(71) Applicant: **KANEKA CORPORATION**
**Osaka-shi, Osaka 530 (JP)**

(72) Inventors:
- **OZAWA, Shinji**
  **Nakagyo-ku, Kyoto 604 (JP)**
- **GOTO, Masaoki**
  **Kobe-shi, Hyogo 655 (JP)**
- **TAMAI, Kazuhiko**
  **Kobe-shi, Hyogo 655 (JP)**
- **KURIMOTO, Kenji**
  **Kobe-shi, Hyogo 655 (JP)**

(74) Representative:
**VOSSIUS & PARTNER**
**Siebertstrasse 4**
**81675 München (DE)**

(54) **GRAFTED POLYOLEFIN RESIN AND THERMOPLASTIC RESIN COMPOSITION CONTAINING THE SAME**

(57) A graft-modified polyolefinic resin, obtained by the polymerization of (a-1) 100 parts by weight of a polyolefinic resin prepared in the presence of a single site catalyst with (a-2) from 0.1 to 30 parts by weight of a compound (a-2a) containing a specific glycidyl group and/or a compound (a-2b) containing a glycidyl group composed of an unsaturated glycidyl ester or the foregoing component (a-2) and a vinyl monomer (a-3) in the presence of a radical polymerization initiator (a-4), and a resin composition comprising the foregoing graft-modified polyolefinic resin and a thermoplastic resin.



Printed by Xerox (UK) Business Services
2.16.3/3.4

## Description

### TECHNICAL FIELD

The present invention relates to a graft-modified polyolefinic resin and a thermoplastic resin composition containing the same. More particularly, the present invention relates to a resin composition having improvements in fluidity, weldability, impact resistance, etc. which can be preferably used in automobile parts, household appliance parts, industrial parts, sports goods, furniture, etc.

### BACKGROUND ART

Polyolefinic resins have excellent mechanical properties, chemical properties, physical properties and workability and thus have been used as inexpensive plastic materials. Among these polyolefinic resins, olefinic elastomers such as ethylene-propylene copolymer and ethylene-propylene-nonconjugated diene copolymer have been used to make an attempt to reduce the weight of a thermoplastic resin such as polyester resin, polyamide resin and polycarbonate resin or improve physical properties such as impact resistance of such a thermoplastic resin when blended in such a thermoplastic resin. However, since non-polar olefinic elastomers have a poor compatibility with these thermoplastic resins, the two resins cannot be uniformly dispersed even when blended with each other. The resulting mixture rather shows deterioration in mechanical properties such as rigidity and impact resistance, making it impossible to obtain a resin composition having desired physical properties. This attempt is further disadvantageous in that the drop of interfacial adhesive strength remarkably impairs weldability.

As an approach for improving the compatibility of thermoplastic resin with olefinic elastomer, a method involving the blending of an ethylene-propylene copolymer or ethylene-propylene-nonconjugated copolymer (graft copolymer) modified with an unsaturated epoxy monomer or the like in a polyester resin is disclosed in JP-B-6-15659 (The term "JP-B" as used herein means an "examined Japanese patent publication"). A method involving the blending of said graft copolymer in a polycarbonate resin is disclosed in JP-B-6-27254. A method involving the blending of the graft copolymer in a polyester resin/polycarbonate resin is disclosed in JP-B-7-30163. Further, JP-B-7-42339 discloses a method involving the blending of a graft copolymer obtained by bulk graft polymerization of an epoxy monomer with an ethylene-propylene copolymer or ethylene-propylene-nonconjugated diene copolymer in a polyester resin or the like. All these proposals are intended to make an attempt to improve the impact resistance and weldability of thermoplastic resins. However, these proposals leave something to be desired in the effect of improving these properties.

International Patent Application No. WO8604076 proposes a method involving the blending of a glycidyl methacrylate-modified ethylene-propylene-nonconjugated diene copolymer in a polyester or polyamide resin. U.S. Patent No. 5,349,027 proposes the blending of a polyolefin resin modified with a specific epoxy monomer in a polyester resin, polyamide resin or polycarbonate resin. However, these proposals are not intended to improve the weldability of such a resin composition. These proposals are also disadvantageous in that since a glycidyl compound reactive with a polyester resin, etc. is used to modify such a resin composition, the fluidity of such a resin composition is deteriorated although the compatibility of such a resin composition can be enhanced. Thus, these proposals leave something to be desired.

None of the foregoing proposals with respect to known epoxy-modified polyolefinic resin has no reference to polyolefin produced by the specific production process of the present application. Thus, these proposals provide little or no improvements in fluidity, weldability, impact resistance, etc., which are properties to be improved herein.

On the other hand, it has been attempted to blend a polyolefin resin produced in the presence of a catalyst having a specific structure (single site catalyst) such as metallocene catalyst and geometrically restrained catalyst in a thermoplastic resin. For example, U.S. Patent No. 5,416,148 proposes the blending of an ethylenic polymer produced in the presence of a single site catalyst in a polycarbonate resin. However, the compatibility of the two resins with each other is not always sufficient. Thus, this proposal leaves much to be desired in improvement of weldability.

It is therefore an object of the present invention to provide a resin composition well-balanced in various properties such as fluidity, weldability and impact resistance made of a thermoplastic resin and a graft-modified polyolefinic resin obtained by adding a glycidyl group-containing compound or a glycidyl group-containing compound and a vinyl monomer to a specific polyolefinic resin.

### DISCLOSURE OF THE INVENTION

The inventors have conducted extensive studies with the aim of solution to the foregoing problems. As a result, it was found that the foregoing object of the present invention can be accomplished with a resin composition composed of a thermoplastic resin and a graft-modified polyolefinic resin obtained by the reaction of a specific polyolefinic resin with a glycidyl group-containing compound or a glycidyl group-containing compound and a vinyl monomer in the presence of a radical polymerization initiator, thereby resulting in the accomplishment of the present invention.

The first aspect of the present invention concerns a graft-modified polyolefinic resin, which is produced by the polymerization of (a-1) 100 parts by weight of a polyolefinic resin prepared in the presence of a single site catalyst with (a-2) from 0.1 to 30 parts by weight of a compound (a-2a) containing a glycidyl group represented by the following formula (I):

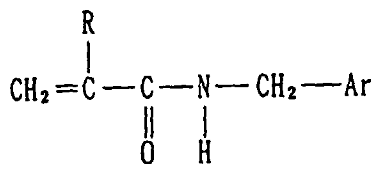

(I)

wherein Ar represents a $C_{6\text{-}23}$ aromatic hydrocarbon group bonded to at least one glycidyloxy group; and R represents a hydrogen atom or a methyl group and/or a compound (a-2b) containing a glycidyl group composed of an unsaturated glycidyl ester in the presence of (a-4) a radical polymerization initiator in an amount of from 0.001 to 10 parts by weight based on 100 parts by weight of the component (a-2).

The second aspect of the present invention concerns a graft-modified polyolefinic resin, which is produced by the polymerization of (a-1) 100 parts by weight of a polyolefinic resin prepared in the presence of a single site catalyst with (a-2) from 0.1 to 30 parts by weight of a compound (a-2a) containing a glycidyl group represented by the following formula (I):

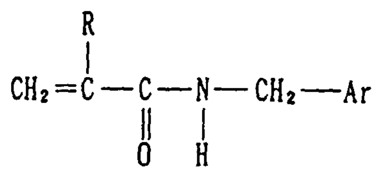

(I)

wherein Ar represents a $C_{6\text{-}23}$ aromatic hydrocarbon group bonded to at least one glycidyloxy group; and R represents a hydrogen atom or a methyl group and/or a compound (a-2b) containing a glycidyl group composed of an unsaturated glycidyl ester and (a-3) from 1 to 500 parts by weight of a vinyl monomer in the presence of (a-4) a radical polymerization initiator in an amount of from 0.001 to 10 parts by weight based on 100 parts by weight of the sum of the weight of the components (a-2) and (a-3).

The third aspect of the present invention concerns a thermoplastic resin composition comprising (A) from 1 to 99% by weight of a graft-modified polyolefinic resin according to the foregoing first or second aspect of the present invention and (B) from 1 to 99% by weight of at least one thermoplastic resin selected from the group consisting of polyester resin, polyamide resin and polycarbonate resin.

The fourth aspect of the present invention concerns a thermoplastic resin composition produced by blending (C) from 1 to 100 parts by weight of an unmodified polyolefinic resin in (D) 100 parts by weight of a thermoplastic resin composition according to the foregoing third aspect of the present invention.

The fifth aspect of the present invention concerns a thermoplastic resin composition produced by blending from 1 to 100 parts by weight of an aromatic vinyl resin in (D) 100 parts by weight of a thermoplastic resin composition according to the foregoing third or fourth aspect of the present invention.

The sixth aspect of the present invention concerns a thermoplastic resin composition produced by blending (E) from 1 to 100 parts by weight of a filler in (D) 100 parts by weight of a thermoplastic resin composition according to the foregoing third, fourth or fifth aspect of the present invention.

## BEST MODE FOR CARRYING OUT THE INVENTION

The polyolefinic resin (a-1) to be used herein is produced in the presence of a single site catalyst.

The single site catalyst employable herein is a catalyst having uniform active points such as metallocene catalyst having one or more cyclopentadienyl skeletons such as cyclopentadienyl and substituted cyclopentadienyl disclosed in JP-B-4-12283, JP-A-60-35006 (The term "JP-A" as used herein means an "unexamined published Japanese patent application"), JP-A-60-35007, JP-A-60-35008, JP-A-63-280703, JP-A-3-163088 and U.S. Patent No. 5,272,236 and

geometrically restrained catalyst. Examples of metal atoms which can be preferably incorporated in these catalysts include titanium, zirconium, and hafnium.

Examples of the metallocene catalyst employable herein include zirconium compounds such as cyclopentadienyl zirconium trichloride, pentamethylcyclopentadienyl zirconium trichloride, bis(cyclopentadienyl)zirconium dichloride, bis(cyclopentadienyl)zirconium monomethyl monochloride, bis(methylcyclopentadienyl)zirconium dichloride, bis(pentamethylcyclopentadienyl)zirconium dichloride, bis(ethylcyclopentadienyl)zirconium dichloride, bis(cyclopentadienyl)zirconium diphenyl, dimethylsilyl dicyclopentadienyl zirconium dimethyl and methylphosphine dicyclopentadienyl zirconium dimethyl, titanium compounds such as bis(indenyl)titanium diphenyl, bis(cyclopentadienyl) titanium dialkyl, bis(cyclopentadienyl)titanium diphenyl, bis(methylcyclopentadienyl)titanium dialkyl and bis(1,2-dimethyl cyclopentadienyl)titanium dichloride, and hafnium compounds such as bis(cyclopentadienyl)hafnium dichloride and bis(cyclopentadienyl)hafnium dimethyl.

Examples of the geometrically restrained catalyst employable herein include (t-butylamide)(tetramethyl-$\eta^5$-cyclopentadienyl)-1,2-ethanediil zirconium dichloride, (t-butylamide)(tetramethyl-$\eta^5$-cyclopentadienyl)-1,2-ethanediil titanium dichloride, (methylamide)(tetramethyl-$\eta^5$-cyclopentadienyl)-1,2-ethanediil zirconium dichloride, (methylamide)(tetramethyl-$\eta^5$-cyclopentadienyl)-1,2-ethanediil titanium dichloride, (ethylamide)(tetramethyl-$\eta^5$-cyclopentadienyl)methylene titanium dichloride, (t-butylamide)dibenzyl(tetramethyl-$\eta^5$-cyclopentadienyl)silane zirconium dibenzyl, (benzylamide)dimethyl(tetramethyl-$\eta^5$-cyclopentadienyl)silane titanium dichloride, (phenylphosphide)dimethyl(tetramethyl-$\eta^5$-cyclopentadienyl) silane zirconium dibenzyl, and (t-butylamide)dimethyl (tetramethyl-$\eta^5$-cyclopentadiethyl)silane titanium dimethyl.

The single site catalyst of the present invention may be used in combination with a cocatalyst. Preferred examples of the cocatalyst employable herein include organic aluminum oxy compounds and boron-based compounds. Preferred among these compounds is methyl alumoxane or tris (pentafluorophenyl)boran.

The molecular weight distribution (Mw/Mn) represented by the ratio of weight-average molecular weight (Mw) to number-average molecular weight (Mn) of the polyolefinic resin (a-1) produced in the presence of the foregoing single site catalyst is not more than 3.5, preferably from 1.5 to 2.5, more preferably from 1.7 to 2.3. If the molecular weight distribution (Mw/Mn) deviates from the above defined range, the resulting polyolefinic resin tends to exhibit deteriorated fluidity and workability and ill-balanced mechanical properties. The molecular weight distribution can be directly measured by ordinary gel permeation chromatography (GPC). The molecular weight distribution can also be determined by measuring melt flow ratio ($I_{10}/I_2$), which is the ratio of melt index at 190°C/10kgf to at 190°C/2.16kgf, as defined in ASTM D-1238.

Preferred among the foregoing polyolefinic resins (a-1) is a polyolefinic resin having a melt flow ratio ($I_{10}/I_2$) of not less than 5.63 and a molecular weight distribution (Mw/Mn) represented by the following formula (II):

$$Mw/Mn \leq (I_{10}/I_2) - 4.63 \qquad (II)$$

If $I_{10}/I_2$ value falls below the above defined range, the resulting polyolefinic resin exhibits a deteriorated shear response and hence a deteriorated formability or workability. The melt flow ratio and molecular weight distribution represented by the foregoing formula (II) are desirable from the standpoint of balance in mechanical properties, etc.

The polyolefinic resin (a-1) to be used herein also has a narrow molecular weight distribution and a high shear response. As a result, a graft-modified polyolefinic resin having excellent fluidity and formability/workability as well as a good dispersibility in a thermoplastic resin can be obtained.

The density of the polyolefinic resin (a-1) is not more than 0.95 g/cm$^3$, preferably not more than 0.88 g/cm$^3$.

As the monomer constituting the polyolefinic resin (a-1) of the present invention there may be used a $C_{2-20}$ $\alpha$-olefin such as ethylene, propylene, 1-butene, isobutene, 1-pentene, 1-hexene, 4-methyl-1-pentene, 1-heptene, 1-octene, 1-nonene, 1-decene, 1-undecene, 1-tridecene, 1-tetradecene and 3-methyl-1-butene. These monomers may be used singly or in combination.

Examples of ethylenically unsaturated monomers copolymerizable with the foregoing $\alpha$-olefin include dienes, ethylenically unsaturated nitrile compounds, and unsaturated aliphatic and aromatic vinyl compounds.

A preferred combination of these monomers is a copolymer of ethylene with a $C_{3-10}$ $\alpha$-olefin, more preferably a copolymer of ethylene with at least one $\alpha$-olefin selected from the group consisting of 1-butene, 1-hexene, 4-methyl-1-pentene and 1-octene. A copolymer of ethylene with 1-octene is most preferred from the standpoint of the fluidity and workability of the copolymer and the weldability of the resin composition. Another preferred example of the polyolefinic resin (a-1) is a terpolymer of ethylene with a $C_{3-10}$ $\alpha$-olefin and a nonconjugated diene, particularly a terpolymer of ethylene with propylene and a nonconjugated diene.

Examples of the polyolefinic resin (a-1) of the present invention having the foregoing properties employable herein include ethylene-octene copolymers commercially available from The Dow Chemical Company (e.g., ENGAGE EG8100, EG8150, EG8200).

The foregoing glycidyl group-containing compound (a-2) for use in the modification of the polyolefinic resin (a-1) is

an important constituent of the present invention. As such a compound there may be preferably used a compound (a-2a) containing a glycidyl group represented by the following formula (I):

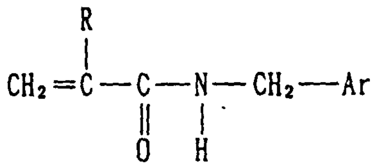

(I)

wherein Ar represents a $C_{6-23}$ aromatic hydrocarbon group bonded to at least one glycidyloxy group; and R represents a hydrogen atom or a methyl group, a compound (a-2b) containing a glycidyl group made of an unsaturated glycidyl ester, or a mixture of the compound (a-2a) containing a glycidyl group represented by the formula (I) and the compound (a-2b) containing a glycidyl group composed of an unsaturated glycidyl ester.

The compound containing a glycidyl group represented by the formula (I) is derived from a compound containing one acrylamide group and one glycidyl group per molecule. The term "acrylamide group" as used herein is meant to indicate methacrylamide group besides acrylamide group.

Such a compound can be produced by, e.g., a method as disclosed in JP-A-60-130580. In some detail, an aromatic hydrocarbon containing at least one phenolic hydroxyl group and N-methylolacrylamide or N-methylolmethacrylamide are allowed to undergo condensation in the presence of an acidic catalyst to give a condensation product the hydroxyl group of which is then glycidylated with epihalohydrin to obtain a desired compound. As the foregoing aromatic hydrocarbon containing at least one phenolic hydroxyl group there may be used a $C_{6-23}$ phenol compound. Specific examples of the phenol compound include phenol, cresol, xylenol, carvacrol, thymol, naphthol, resorcin, hydroquinone, pyrogallol, and phenanthrol. Preferred among these phenol compounds is a monovalent phenol containing an alkyl substituent.

For example, if as starting materials there are used 2, 6-xylenol and N-methylolacrylamide, a compound represented by the following formula (III):

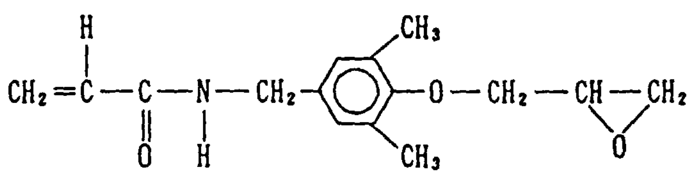

(III)

can be obtained.

If as starting materials there are used ortho cresol and N-methylolacrylamide, a compound represented by the following formula (IV):

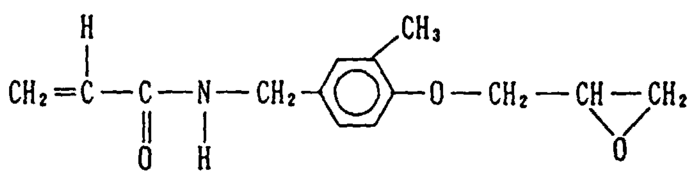

(IV)

can be obtained.

Particularly preferred among these compounds is the compound represented by the formula (III).

Examples of the compound (a-2b) containing a glycidyl group composed of an unsaturated glycidyl ester employable herein include glycidyl acrylate, glycidyl methacrylate, monoglycidyl ester and diglycidyl ester of itaconic acid, monoglycidyl ester, diglycidyl ester and triglycidyl ester of butenetricarboxylic acid, monoglycidyl ester and diglycidyl ester of citraconic acid, monoglycidyl ester and diglycidyl ester of endo-cis-bicyclo[2,2,1]hepto-5-ene-2,3-dicarboxylic acid, monoglycidyl ester and diglycidyl ester of endo-cis-bicyclo[2,2,1]hepto-5-ene-2-methyl-2,3-dicarboxylic acid, monoglycidyl ester and diglycidyl ester of allylsuccinic acid, and glycidyl ester of p-styrenecarboxylic acid. These compounds may be used singly or in combination. Preferred among these compounds is glycidyl methacrylate from the

viewpoint of cost and graft-polymerizability with the polyolefinic resin (a-1).

The amount of the compound (a-2) represented by the formula (I) or the unsaturated glycidyl ester to be used in the present invention is from 0.1 to 30 parts by weight, preferably from 0.5 to 30 parts by weight based on 100 parts by weight of the polyolefinic resin (a-1). If the amount of the compound (a-2) or the unsaturated glycidyl ester to be used exceeds the above defined range, the resulting resin composition exhibits deteriorated mechanical properties and fluidity. On the contrary, if the amount of the compound (a-2) or the unsaturated glycidyl ester to be used falls below the above defined range, the resulting effect of modifying and compatibilizing the resin is insufficient. Referring to the mixing ratio of the compound (a-2a) containing a glycidyl group represented by the formula (I) and the compound (a-2b) containing a glycidyl group composed of an unsaturated glycidyl ester, if used in admixture as component (a-2), the sum of the amount of the two glycidyl group-containing compounds is from 0.1 to 30 parts by weight, preferably from 0.5 to 30 parts by weight.

The mixing ratio of the compound (a-2b) containing a glycidyl group composed of an unsaturated glycidyl ester in the mixture is from 1 to 1,000 parts by weight, preferably from 1 to 500 parts by weight, more preferably from 10 to 500 parts by weight, based on 100 parts by weight of the compound (a-2a) containing a glycidyl group represented by the formula (I). If this mixing ratio exceeds the above defined range, the resulting resin composition exhibits a deteriorated fluidity. On the contrary, if this mixing ratio falls below the above defined range, the resulting resin composition tends to be ill-balanced in physical properties such as mechanical properties.

The graft-modified polyolefinic resin according to the present invention comprises the foregoing polyolefinic resin (a-1) and glycidyl group-containing compound (a-2). The graft-modified polyolefinic resin may further comprise a vinyl monomer incorporated therein as a component (a-3). The vinyl monomer (a-3) is desirable because it can inhibit the break or nonuniform graft polymerization of main chain polyolefinic resin.

Examples of the vinyl monomer (a-3) to be used in the present invention include aromatic vinyl compound such as styrene, o-methylstyrene, p-methylstyrene, m-methylstyrene, $\alpha$-methylstyrene, vinyltoluene and divinylbenzene, $C_{1-22}$ methacrylic acid alkyl ester such as methyl methacrylate, ethyl methacrylate, i-propyl methacrylate, n-butyl methacrylate, t-butyl methacrylate, allyl methacrylate, 2-ethylhexyl methacrylate and stearyl methacrylate, $C_{1-22}$ acrylic acid alkyl ester such as methyl acrylate, ethyl acrylate, i-propyl acrylate, n-butyl acrylate, t-butyl acrylate, 2-ethylhexyl acrylate and stearyl acrylate, $C_{1-22}$ vinyl alkyl ether such as vinyl methyl ether, vinyl ethyl ether, vinyl-n-propylether, vinyl-i-propylether, vinyl-i-butylether, vinyl-n-amylether, vinyl-i-amylether, vinyl-2-ethylhexylether and vinyl octadecyl ether, unsaturated nitrile compound such as acrylonitrile and methacrylonitrile, unsaturated amino compound such as acrylamide and methacrylamide, maleic acid di-alkylester such as maleic di-n-amylester, maleic acid di-n-butylester, maleic acid di-i-amylester, maleic acid i-butylester, maleic acid dimethylester, maleic acid di-n-propylester, maleic acid di-octylester and maleic acid dinonylester, $C_{1-8}$ allyl alkyl ether such as allyl ethyl ether and allyl-n-octyl ether, diene compounds such as dicyclopentadiene, butadiene, isoprene, chloroprene, phenylpropanediene, cyclopentadiene, 1,5-norbornadiene, 1,3-cyclohexadiene, 1, 4-cyclohexadiene, 1,5-cyclohexadiene and 1,3-cyclooctadiene, and other vinyl monomers such as acrylic acid, methacrylic acid, maleic acid, maleic anhydride and vinyl acetate. These vinyl monomers may be used singly or in combination.

Preferred among these compounds are styrene, $\alpha$-methylstyrene, butyl acrylate, methyl methacrylate, allyl methacrylate, vinyl acetate, acrylonitrile, and a mixture of two or more thereof from the viewpoint of cost, copolymerizability with the compound (a-2) containing a glycidyl group represented by the formula (I) and/or a compound containing a glycidyl group composed of an unsaturated glycidyl ester, graft-polymerizability with the polyolefinic resin (a-1), etc.

The mixing ratio of the vinyl monomer (a-3) is from 1 to 500 parts by weight, preferably from 1 to 200 parts by weight, more preferably from 1 to 100 parts by weight, based on 100 parts by weight of the polyolefinic resin (a-1). If this mixing ratio exceeds the above defined range, the polymerization of a vinyl monomer with another may be the majority of the reaction.

Examples of the radical polymerization initiator (a-4) employable herein include organic peroxides such as methyl ethyl ketone peroxide, di-t-butyl peroxide, 1,1-bis(t-butylperoxy)-3,3,5-trimethylcyclohexane, n-butyl-4,4-bis(t-butylperoxy)valerate, 2,5-dimethylhexane-2,5-dihydroperoxide, $\alpha,\alpha'$-bis(t-butylperoxy-m-isopropyl)benzene, 2,5-dimethyl-2,5-di(t-butylperoxy)hexane, 2,5-dimethyl-2,5-di(t-butylperoxy)hexyne-3 and benzoyl peroxide, and azo compounds such as 1,1'-azobis(cyclohexane-1-carbonitrile), 1[(1-cyano-1-methylethyl)azo]foramide, 2-phenylazo-4-methoxy-2,4-dimethyl-valeronitrile, 2,2'-azobis(2-methyl butyronitrile), 2,2'-azobisisobutyronitrile, 2,2'-azobis(2, 4,4-trimethylpentane), 2,2'-azobis(2-acetoxypropane) and 2,2'-azobis(2-2-acetoxybutane). These radical polymerization initiators may be used singly or in combination. Desired radical polymerization initiators can be properly selected from these compounds depending on the graft polymerization conditions or the molecular weight, viscosity, etc. of the polymer thus obtained.

The amount of the foregoing radical polymerization initiator (a-4) to be used is from 0.001 to 10 parts by weight, preferably from 0.05 to 3 parts by weight, based on 100 parts by weight of the sum of the amount of the compound (a-2) containing a glycidyl group represented by the formula (I) and/or a compound containing a glycidyl group composed of an unsaturated glycidyl ester and the vinyl monomer (a-3). If the amount of the foregoing radical polymerization initiator (a-4) to be used exceeds the above defined range, excessive crosslinking causes remarkable thickening or the

break of main chain causes remarkable drop of molecular weight. On the contrary, if the amount of the foregoing radical polymerization initiator (a-4) to be used falls below the above defined range, the polymerization system undergoes insufficient polymerization.

Specific examples of the polymerization method for the production of the graft-modified polyolefinic resin (A) according to the present invention include a method which comprises preparing an aqueous suspension containing a component (a-1), a component (a-2) and a component (a-4), impregnating the component (a-1) with the component (a-2) in the aqueous suspension, and then allowing the component (a-2) to undergo polymerization, and a method which comprises preparing an aqueous suspension containing a component (a-1), a component (a-2), a component (a-3) and a component (a-4), impregnating the component (a-1) with the components (a-2) and (a-3) in the aqueous suspension, and then allowing the components (a-2) and (a-3) to undergo polymerization.

The proportion of the components (a-1), (a-2), (a-3) and (a-4) in the aqueous suspension are from 0.1 to 30 parts by weight, preferably from 0.5 to 25 parts by weight based on 100 parts by weight of the component (a-1), from 0 to 500 parts by weight, preferably from 1 to 500 parts by weight, more preferably from 1 to 100 parts by weight based on 100 parts by weight of the component (a-1), and from 0.001 to 10 parts by weight, preferably from 0.05 to 5 parts by weight based on 100 parts by weight of the sum of the amount of the components (a-2) and (a-3), respectively.

In the foregoing production process, the addition of the vinyl monomer as the component (a-3) is desirable because it facilitates uniform penetration of the component (a-2) into the component (a-1) and uniform graft polymerization of the component (a-2) with the component (a-1). However, if the proportion of the component (a-3) exceeds the above defined range, the polymerization of a vinyl monomer with another may be the majority of the reaction, possibly causing deterioration of mechanical properties.

Other examples of the polymerization process for the production of the graft-modified polyolefinic resin (A) include a process which comprises mixing the components (a-1), (a-2) and (a-4), and then subjecting the mixture to melt kneading by means of a heat kneader such as extruder to allow the component (a-2) to be polymerized with the component (a-1), and a process which comprises mixing the components (a-1), (a-2), (a-3) and (a-4), and then subjecting the mixture to melt kneading by means of a heat kneader such as extruder to allow the components (a-2) and (a-3) to be polymerized with the component (a-1).

Referring to the proportion of the components (a-1), (a-2), (a-3) and (a-4) in this case, the proportion of the components (a-2), (a-3) and (a-4) are from 0.1 to 30 parts by weight, preferably from 0.5 to 25 parts by weight based on 100 parts by weight of the component (a-1), from 0 to 100 parts by weight, preferably from 1 to 100 parts by weight, more preferably from 1 to 50 parts by weight based on 100 parts by weight of the component (a-1), and from 0.001 to 10 parts by weight, preferably from 0.05 to 5 parts by weight based on 100 parts by weight of the sum of the amount of the components (a-2) and (a-3), respectively.

In this production process, too, the addition of the vinyl monomer as the component (a-3) facilitates uniform graft polymerization of the component (a-2) with the component (a-1). However, if the proportion of the component (a-3) exceeds the above defined range, excess vinyl monomer can be distilled off, possibly causing the generation of offensive odor or deterioration of mechanical properties.

Examples of polyester resin as one of the thermoplastic resins (B) employable herein include polymer or copolymer obtained by the condensation reaction of an aromatic dicarboxylic acid or ester-forming derivative thereof with a diol or ester derivative thereof as main components, and ring opening polymerization product of lactone. These polyester resins may be used singly or in combination.

Examples of the foregoing aromatic dicarboxylic acid include terephthalic acid, isophthalic acid, phthalic acid, 2,6-naphthalenedicarboxylic acid, bis(p-carboxyphenyl)methane, anthracenedicarboxylic acid, 4,4'-diphenyldicarboxylic acid, 4,4'-diphenyletherdicarboxylic acid, and ester-forming derivative thereof. These aromatic dicarboxylic acids may be used singly or in combination.

Examples of the foregoing diol component include $C_{2-10}$ aliphatic diol such as ethylene glycol, 1,3-propanediol, 1,4-butanediol, neopentyl glycol, 1,5-pentanediol, 1,6-hexanediol, 1,8-octanediol and cyclohexanediol, and long-chain glycol having a molecular weight of from 400 to 6,000 such as polyethylene glycol, poly-1,3-propylene glycol and polytetramethylene glycol. These diol components may be used singly or in combination.

Specific examples of the polyester resin of the present invention include polyethylene terephthalate, polypropylne terephthalate, polybutylene terephthalate, polyhexamethylene terephthalate, and polyethylene-2,6-naphthalate. These polyester resins may be used singly or in combination. Preferred among these polyester resins are polyethylene terephthalate, polybutylene terephthalate, and mixture thereof from the viewpoint of balance of mechanical properties, heat resistance and workability.

The polyamide resin as one of the thermoplastic resins (B) to be used in the present invention is normally referred to as "nylon". Any polyamide resin may be used without any restriction so far as it has an acid amide bond (-CONH-) as a repeating unit. Specific examples of the polyamide resin include polymer obtained by the condensation reaction of aliphatic amino acid, lactam, diamine and dicarboxylic acid as main components, and copolymer polyamide comprising the foregoing aliphatic component having a small amount of an aromatic component or other aliphatic components

incorporated therein.

Examples of the foregoing aliphatic amino acid include 6-aminocaproic acid, 11-aminoundecanoic acid, and 12-aminododecanoic acid. These aliphatic amino acids may be used singly or in combination.

Examples of the foregoing lactam include ε-caprolactam, and ω-laurolactam. These lactams may be used singly or in combination.

Examples of the foregoing diamine include tetramethylenediamine, hexamethylenediamine, undecamethylenediamine, and dodecamethylenediamine. These diamines may be used singly or in combination.

Examples of the foregoing dicarboxylic acid include adipic acid, azelaic acid, sebacic acid, dodecanedioic acid, and diglycolic acid. These dicarboxylic acids may be used singly or in combination.

Specific examples of the foregoing polyamide resin include polycaprolactam (nylon-6), polyhexamethylene adipamide (nylon-66), nylon-610, polytetramethylene adipamide (nylon-46), polydodecaneamide (nylon-12), nylon-9, and nylon-11. A copolymer or mixture of two or more of these polyamide resins may be used.

Examples of the polycarbonate resin as one of the thermoplastic resins (B) to be used herein include aromatic polycarbonate resin, aliphatic polycarbonate resin, and aliphatic-aromatic polycarbonate resin. Preferred among these polycarbonate resins is aromatic polycarbonate resin.

An aromatic polycarbonate resin is normally produced by the reaction of an aromatic dihydroxy compound with a carbonate precursor.

Examples of the foregoing aromatic dihydroxy compound include bisphenols such as 2,2-bis(4-hydroxyphenyl)propane (commonly known as "bisphenol A"), bis(4-hydroxyphenyl) methane, 2,2-bis(4-hydroxy-3,5-dimethylphenyl)propane, 2,2-bis(4-hydroxy-3,5-dibromophenyl)propane and 2,2-bis(4-hydroxy-3-methylphenyl)propane, divalent phenolethers such as bis(4-hydroxyphenyl)ether and bis(3,5-dichloro-4-hydroxyphenyl)ether, dihydroxydiphenyls such as p,p'-dihydroxydiphenyl and 3,3'-dichloro-4,4'-dihydroxydiphenyl, dihydroxyarylsulfones such as bis(4-hydroxyphenyl)sulfone and bis(3,5-dimethyl-4-hydroxyphenyl)sulfone, dihydroxybenzenes such as resorcinol and hydroquinone, halo- or alkyl-substituted dihydroxybenzenes such as 1,4-dihydroxy-2,5-dichlorobenzene and 1,4-dihydroxy-3-methylbenzene, and dihydroxydiphenyl sulfides and dihydroxydiphenyl sulfoxides such as bis(4-hydroxyphenyl) sulfide, bis(4-hydroxyphenyl) sulfoxide and bis(3,5-dibromo-4-hydroxyphenyl) sulfoxide. These compounds may be used singly or in combination. Preferred among these compounds is bisphenol A.

Examples of the foregoing carbonate precursor include carbonyl halides such as phosgene, carbonyl esters such as diphenyl carbonate, and haloformates. These carbonate precursors may be used singly or in combination.

The polycarbonate resin to be used herein may be partially branched. For example, the polycarbonate resin may be a thermoplastic random branched polycarbonate resin obtained by the reaction of a polyfunctional aromatic compound with a divalent phenol and a carbonate precursor. Further, the polycarbonate resin may be a mixture of a straight-chain polycarbonate and a branched polycarbonate.

Examples of the polyfunctional aromatic compound include 1,1,1-tri(4-hydroxyphenyl)ethane, trimellitic anhydride, trimellitic acid, trimellitoyl trichloride, 4-chloroformylphthalic anhydride, pyromellitic acid, pyromellitic dihydride, mellitic acid, mellitic anhydride, trimesic acid, benzophenonetetracarboxylic acid, and benzophenonetetracarboxylic anhydride. These polyfunctional aromatic compounds may be used singly or in combination.

The mixing ratio of the graft-modified polyolefinic resin as the component (A) and the thermoplastic resin as the component (B) are from 1 to 99% by weight and from 99 to 1% by weight, respectively.

If the mixing ratio of these components exceeds the above defined range, the resulting resin composition does not have the properties of the components (A) and (B) in combination but substantially comprises a single one of the two components.

The resin composition of the present invention may comprise a catalyst incorporated therein for enhancing the reactivity of the graft-modified polyolefinic resin (A) with the thermoplastic resin (B).

The foregoing catalyst is not specifically limited. In general, one or more compounds can be selected in combination from the group consisting of compounds which accelerate the reaction of carboxylic acid, hydroxyl group or ester group with glycidyl group. Preferred examples of such a compound include amine compounds such as tertiary amine and quaternary ammonium salt, phosphorus compounds such as phosphonium salt and phosphine, and imidazoles. Such a compound may be used in an amount of from 0.001 to 2 parts by weight based on 100 parts by weight of the thermoplastic resin (B).

The process for the production of the resin composition of the present invention is not specifically limited so far as the reaction of the component (A) with the component (B) occurs. In practice, however, the production process preferably involves melt-kneading of various starting materials in a kneader. As the kneader there may be used an extruder, a Banbury mixer, a mill, a kneader or a heated roll, singly or in combination. In order to produce the resin composition at a low cost, a single screw or multiple screw extruder is preferably used.

Examples of the unmodified polyolefinic resin (C) to be used herein include homopolymer or copolymer of one or more selected in combination selected from the group of monomers such as ethylene, propylene, 1-butene, 1-pentene, 1-hexene, 1-octene, isobutene, butadiene, isoprene, chloroprene, phenylpropadiene, cyclopentadiene, 1,3-cyclohexadiene, 1,4-hexadiene, 1,3-octadiene, 1,5-cyclooctadiene, methylene norbornene, 1,5-norbornadiene, ethylidene norbornene, α, ω-nonconjugated dienes, vinyl acetate and ethyl acrylate. The unmodified polyolefinic resin (C) may be a mixture of two or more of these homopolymers or copolymers. As the unmodified polyolefinic resin (C) there may be also used a polyolefinic resin produced in the presence of the single site catalyst (a-1) for use in the production of the graft-modified polyolefinic resin (A).

Preferred among these unmodified polyolefinic resins are propylene homopolymer, propylene-ethylene copolymer, ethylene homopolymer, ethylene-propylene copolymer, ethylene-butene copolymer, ethylene-hexene copolymer, ethylene-octene copolymer, ethylene-propylene-nonconjugated diene copolymer, ethylene-vinyl acetate copolymer, and ethylene-ethyl acrylate copolymer.

Specific examples of the nonconjugated diene in the ethylene-propylene-nonconjugated diene copolymer include dicyclopentadiene, 1,4-hexadiene, 1,4-heptadiene, 6-methyl-1,5-heptadiene, 1,5-cyclooctadiene, 2,5-norbornadiene, 2-methyl-2,5-norbornadiene, 5-methylidene-2-norbornene, 5-ethylidene-2-norbornene, 5-n-propylidene-2-norbornene, 5-isopropylidene-2-norbornene, 5-n-butylidene-2-norbornene, 5-isobutylidene-2-norbornene, methyltetrahydroindene, and limonene. These nonconjugated dienes may be used singly or in combination.

The mixing ratio of the unmodified polyolefinic resin (C) is from 1 to 100 parts by weight, preferably from 2 to 50 parts by weight, based on 100 parts by weight of the thermoplastic resin composition (D) comprising (A) from 1 to 99% by weight of the graft-modified polyolefinic resin and (B) from 1 to 99% by weight of at least one thermoplastic resin selected from the group consisting of polyester resin, polyamide resin and polycarbonate resin. If the mixing ratio of the unmodified polyolefinic resin (C) exceeds the above defined range, the compatibility of the unmodified polyolefinic resin (C) with the thermoplastic resin (B) is deteriorated, providing a resin composition ill-balanced in mechanical properties, surface properties, fluidity, etc.

The method and order of mixing the unmodified polyolefinic resin (C) are not specifically limited. Various methods and orders may be employed.

Referring to the mixing method, various starting materials is preferably melt-kneaded in a kneader. As the kneader there may be used an extruder, a Banbury mixer, a mill, a kneader or a heated roll, singly or in combination. In order to produce the resin composition at a low cost, a single screw or multiple screw extruder is preferably used.

Examples of the order of mixing include (i) a method which comprises simultaneous charging of the components (A), (B) and (C) into the foregoing kneader where they are then collectively kneaded, (ii) a method which comprises simultaneous charging of the components (A) and (B) into an extruder, and then charging the component (C) into the extruder at the middle point of the barrel where they are then kneaded, (iii) a method which comprises simultaneous charging of the components (A) and (C) into an extruder, and then charging the component (B) into the extruder at the middle point of the barrel where they are then kneaded, (iv) a method which comprises simultaneous charging of the components (B) and (C) into an extruder, and then charging the component (A) into the extruder at the middle point of the barrel where they are then kneaded, (v) a method which comprises simultaneously charging the components (B) and (C) into a kneader, withdrawing the mixture as a master batch from the kneader, and then kneading the master batch with the component (A), (vi) a method which comprises kneading a master batch comprising the components (A) and (B) with the component (C), and (vii) a method which comprises kneading a master batch comprising the components (A) and (C) with the component (B).

The aromatic vinyl resin to be used herein is one obtained by the copolymerization of at least one compound selected from the group consisting of unsaturated aromatic compound, unsaturated cyan compound and unsaturated carboxylic acid ester compound in the presence or absence of a rubber polymer.

As the foregoing rubber polymer there may be used a rubber such as olefinic rubber and silicone rubber. A diene rubber containing diene in an amount of not less than 50% by weight or an acrylic acid ester rubber is particularly preferred. These rubber polymers may be used singly or in combination. Examples of the diene rubber employable herein include polybutadiene, acrylonitrile-butadiene copolymer, styrene-butadiene copolymer, and butyl acrylate-butadiene copolymer. Examples of the acrylic acid ester rubber employable herein include polybutyl acrylate rubber. These diene rubbers and acrylic acid ester rubbers may be used singly or in combination.

Examples of the unsaturated aromatic compound employable herein include styrene, o-methylstyrene, p-methylstyrene, m-methylstyrene, α-methylstyrene, and divinylbenzene. Examples of the unsaturated cyan compound employable herein include acrylonitrile, and methacrylonitrile. Examples of the unsaturated carboxylic acid ester compound include methacrylic acid alkyl ester such as methyl methacrylate, ethyl methacrylate, i-propyl methacrylate, n-butyl methacrylate, t-butyl methacrylate, 2-ethylhexyl methacrylate, allyl methacrylate and stearyl methacrylate, and acrylic acid alkyl ester such as methyl acrylate, ethyl acrylate, i-propyl acrylate, n-butyl acrylate, t-butyl acrylate, 2-ethylhexyl acrylate and stearyl acrylate. These compounds may be used singly or in combination. Further, other monomers copolymerizable with these compounds may be used as well.

Specific examples of the aromatic vinyl resin employable herein include ABS resin, AS resin, MABS resin, MBS resin, AAS resin, AES resin, acrylonitrile-butadiene-styrene-α-methylstyrene copolymer, acrylonitrile-methyl methacrylate-butadiene-styrene-α-methylstyrene copolymer, polystyrene, styrene-α-methylstyrene copolymer, HIPS resin,

methyl methacrylate-styrene copolymer, styrene-maleimide copolymer, styrene-N-substituted maleimide copolymer, acrylonitrile-butadiene-styrene-β-isopropenylnaphthalene copolymer, acrylonitrile-methyl methacrylate-butadiene-styrene-α-methylstyrene-N-substituted maleimide copolymer, styrene-butadiene-styrene block copolymer, styrene-isoprene-styrene block copolymer, styrene-ethylene-butene-styrene block copolymer, styrene-ethylene-propylene-styrene block copolymer, styrene-isobutylene-styrene block copolymer, and bromated p-methylstyrene-isobutylene copolymer. These aromatic vinyl resins may be used singly or in combination.

Examples of the filler (E) employable herein include silica, talc, mica, glass fiber, neutral clay, carbon fiber, aromatic polyamide fiber, silicon carbide fiber, and titanate fiber. These foregoing fillers may be used, singly or in combination, in an amount of from 1 to 100 parts by weight, preferably from 5 to 50 parts by weight based on 100 parts by weight of the resin composition (D) of the present invention. If the amount of the filler (D) exceeds the above defined range, the resulting resin composition is ill-balanced in mechanical properties, molding fluidity, etc. On the contrary, if the amount of the filler (D) falls below the above defined range, the resulting effect is lower than expected.

The graft-modified polyolefinic resin (A) or resin composition (D) according to the present invention may comprise a fire retardant, a pigment, a stabilizer, an oxidation inhibitor, an antistatic agent, a nucleating agent, a lubricant, etc. incorporated therein as necessary.

Examples of the foregoing fire retardant employable herein include halogenated fire retardant such as tetrabromobisphenol A, 2,2-bis(4-hydroxy-3,5-dibromophenyl) propane, hexabromobenzene, tris(2,3-dibromopropyl) isocyanurate, 2,2'-bis(4-4-hydroxyethoxy-3,5-dibromophenyl) propane, decabromodiphenyl oxide, bromated polyphosphate, chlorinated polyphosphate and chlorinated paraffin, phosphorus-based fire retardant such as ammonium phosphate, tricresyl phosphate, triethyl phosphate, trischloroethyl phosphate, tris(β-chloroethyl)phosphate, trisdichloropropyl phosphate, cresylphenyl phosphate, trisdichloropropyl phosphate, cresylphenyl phosphate, xylenyldiphenyl phosphate, acidic ester phosphate and nitrogen-containing phosphorus compound, inorganic fire retardant such as red phosphorus, tin oxide, antimony trioxide, zirconium hydroxide, barium metaborate, aluminum hydroxide and magnesium hydroxide, and high molecular fire retardant such as bromated polystyrene, bromated poly-α-methylstyrene, bromated polycarbonate, bromated polyepoxy resin, chlorinated polyethylene, chlorinated poly-α-methylstyrene, chlorinated polycarbonate and chlorinated polyepoxy resin.

The foregoing fire retardants may be used, singly or in combination, in an amount of from 1 to 50 parts by weight, preferably from 3 to 30 parts by weight, based on 100 parts by weight of the graft-modified polyolefinic resin (A) or resin composition (D) of the present invention. If the amount of the fire retardant to be used exceeds the above defined range, the resulting resin composition is ill-balanced in mechanical properties, molding fluidity, etc. On the contrary, if the amount of the fire retardant to be used falls below the above defined range, the resulting effect is lower than expected.

The present invention will be further described in the following examples, but the present invention should not be construed as being limited thereto. Various changes can be made therein without departing from the spirit and scope of the present invention.

All the "parts" and "percentages" as used hereinafter are by weight, respectively, unless otherwise indicated.

(Production of graft-modified polyolefinic resin)

Example 1:

Into a sealed pressure reaction vessel were charged 6,000 parts of pure water, 1,500 parts of an ethylene-octene copolymer (ENGAGE EG8200, available from The Dow Chemical Company; octene content: 24% by weight; Mooney viscosity: 8; density: 0.87 g/cm$^3$; Mw/Mn: 2.1; melt flow ratio ($I_{10}/I_2$): 7.6) produced in the presence of a single site catalyst, 93.8 parts of N-{4-(2,3-epoxypropoxy)-3,5-dimethylbenzyl] acrylamide, 93.8 parts of glycidyl methacrylate, 187.6 parts of styrene, 4.56 parts of 1,1-bis(t-butylperoxy)3,3,5-trimethylcyclohexane, 31.5 parts of calcium tertiary phosphate, and 0.945 parts of an emulsifier (Latemul PS®, available from Kao Corp.). These components were then stirred to obtain an aqueous suspension. The aqueous solution thus obtained was stirred at a temperature of 100°C for 1 hour, and then stirred at a temperature of 110°C for 3 hours to complete polymerization. The particulate material thus obtained was washed with water to remove calcium tertiary phosphate and Latemul PS therefrom, and then dried to obtain a graft-modified polyolefinic resin (GPO1).

Example 2:

Into a sealed pressure reaction vessel were charged 6,000 parts of pure water, 1,688 parts of an ethylene-octene copolymer (ENGAGE EG8200, available from The Dow Chemical Company; octene content: 24% by weight; Mooney viscosity: 8; density: 0.87 g/cm$^3$; Mw/Mn: 2.1; melt flow ratio ($I_{10}/I_2$): 7.6) produced in the presence of a single site catalyst, 37.5 parts of N-[4-(2,3-epoxypropoxy)-3,5-dimethylbenzyl] acrylamide, 56.25 parts of glycidyl methacrylate, 93.8 parts of styrene, 4.56 parts of 1,1-bis(t-butylperoxy)3,3,5-trimethylcyclohexane, 31.5 parts of calcium tertiary phosphate, and 0.945 parts of an emulsifier (Latemul PS®, available from Kao Corp.). These components were then stirred to obtain an aqueous suspension. The aqueous solution thus obtained was stirred at a temperature of 100°C for 1 hour, and then stirred at a temperature of 110°C for 3 hours to complete polymerization. The particulate material thus obtained was washed with water to remove calcium tertiary phosphate and Latemul PS therefrom, and then dried to obtain a graft-modified polyolefinic resin (GPO2).

Example 3:

Into a sealed pressure reaction vessel were charged 6,000 parts of pure water, 1,500 parts of an ethylene-octene copolymer (ENGAGE EG8100, available from The Dow Chemical Company; octene content: 24% by weight; Mooney viscosity: 23; density: 0.87 g/cm$^3$; Mw/Mn: 2.2; melt flow ratio ($I_{10}/I_2$): 10.3) produced in the presence of a single site catalyst, 93.8 parts of N-[4-(2,3-epoxypropoxy)-3,5-dimethylbenzyl] acrylamide, 281.5 parts of styrene, 4.56 parts of 1,1-bis(t-butylperoxy)3,3,5-trimethylcyclohexane, 31.5 parts of calcium tertiary phosphate, and 0.945 parts of an emulsifier (Latemul PS®, available from Kao Corp.). These components were then stirred to obtain an aqueous suspension. The aqueous solution thus obtained was stirred at a temperature of 100°C for 1 hour, and then stirred at a temperature of 110°C for 3 hours to complete polymerization. The particulate material thus obtained was washed with water to remove calcium tertiary phosphate and Latemul PS therefrom, and then dried to obtain a graft-modified polyolefinic resin (GPO3).

Example 4:

Into a sealed pressure reaction vessel were charged 6,000 parts of pure water, 1,500 parts of an ethylene-octene copolymer (ENGAGE EG8200, available from The Dow Chemical Company; octene content: 24% by weight; Mooney viscosity: 8; density: 0.87 g/cm$^3$; Mw/Mn: 2.1; melt flow ratio ($I_{10}/I_2$): 7.6) produced in the presence of a single site catalyst, 93.8 parts of glycidyl methacrylate, 281.5 parts of styrene, 4.56 parts of 1,1-bis(t-butylperoxy)3,3,5-trimethylcyclohexane, 31.5 parts of calcium tertiary phosphate, and 0.945 parts of an emulsifier (Latemul PS®, available from Kao Corp.). These components were then stirred to obtain an aqueous suspension. The aqueous solution thus obtained was stirred at a temperature of 100°C for 1 hour, and then stirred at a temperature of 110°C for 3 hours to complete polymerization. The particulate material thus obtained was washed with water to remove calcium tertiary phosphate and Latemul PS therefrom, and then dried to obtain a graft-modified polyolefinic resin (GPO4).

Example 5:

1,700 parts of an ethylene-octene copolymer (ENGAGE EG8100, available from The Dow Chemical Company; octene content: 24% by weight; Mooney viscosity: 23; density: 0.87 g/cm$^3$; Mw/Mn: 2.2; melt flow ratio ($I_{10}/I_2$): 10.3) produced in the presence of a single site catalyst, 37.0 parts of N-[4-(2,3-epoxypropoxy)-3,5-dimethylbenzyl]acrylamide and 0.5 parts of n-butyl-4,4-bis(t-butylperoxy)valerate were dryblended. The dryblend thus obtained was charged at a rate of 15 kg per hour into a twin-screw extruder where it was then melt-kneaded and pelletized at a cylinder temperature of 200°C. The material thus pelletized was then dried at a temperature of 45°C for 12 hours to obtain a graft-modified polyolefinic resin (GPO5).

Example 6:

1,700 parts of an ethylene-octene copolymer (ENGAGE EG8200, available from The Dow Chemical Company; octene content: 24% by weight; Mooney viscosity: 8; density: 0.87 g/cm$^3$; Mw/Mn: 2.1; melt flow ratio ($I_{10}/I_2$): 7.6) produced in the presence of a single site catalyst, 56.0 parts of glycidyl methacrylate, 102.5 parts of styrene, and 2.5 parts of n-butyl-4,4-bis(t-butylperoxy)valerate were dryblended. The dryblend thus obtained was charged at a rate of 15 kg per hour into a twin-screw extruder where it was then melt-kneaded and pelletized at a cylinder temperature of 200°C. The material thus pelletized was then dried at a temperature of 45°C for 12 hours to obtain a graft-modified polyolefinic resin (GPO6).

Example 48:

The procedure of Example 4 was followed except that N-[4-(2,3-epoxypropoxy)-3,5-dimethylbenzyl}acrylamide was used instead of glycidyl methacrylate. Thus, a graft-modified polyolefinic resin (GPO11) was produced.

Example 49:

The procedure of Example 1 was followed except that as the polyolefinic resin there was used ENGAGE EF8100 available from The Dow Chemical Company instead of ENGAGE EF8200 available from The Dow Chemical Company. Thus, a graft-modified polyolefinic resin (GPO12) was produced.

Comparative Example 1:

The procedure of Example 1 was followed except that an ethylene-propylene-nonconjugated diene copolymer (iodine value: 12; propylene content: 24% by weight; diene component: ethylidene norbornene; Mooney viscosity: 26; density: 0.87 g/cm$^3$; Mw/Mn: 4.9) produced in the absence of single site catalyst was used instead of the ethylene-octene copolymer. Thus, a graft-modified polyolefinic resin (GPO7) was produced.

Comparative Example 2:

The procedure of Example 1 was followed except that an ethylene-propylene-nonconjugated diene copolymer (iodine value: 12.5; propylene content: 24% by weight; diene component: ethylidene norbornene; Mooney viscosity: 60; density: 0.86 g/cm$^3$; Mw/Mn: 6.3) produced in the absence of single site catalyst was used instead of the ethylene-octene copolymer. Thus, a graft-modified polyolefinic resin (GPO8) was produced.

Comparative Example 3:

The procedure of Example 4 was followed except that an ethylene-propylene copolymer (propylene content: 26% by weight; Mooney viscosity: 24; density: 0.86 g/cm$^3$; Mw/Mn: 5.1) produced in the absence of single site catalyst was used instead of the ethylene-octene copolymer. Thus, a graft-modified polyolefinic resin (GPO9) was produced.

Comparative Example 4:

The procedure of Example 6 was followed except that an ethylene-propylene copolymer (propylene content: 26% by weight; Mooney viscosity: 24; density: 0.86 g/cm$^3$; Mw/Mn: 5.1) produced in the absence of single site catalyst was used instead of the ethylene-octene copolymer. Thus, a graft-modified polyolefinic resin (GPO10) was produced.

Comparative Example 5:

An ethylene-octene copolymer (ENGAGE EG8200, available from The Dow Chemical Company; octene content: 24% by weight; Mooney viscosity: 8; density: 0.87 g/cm$^3$; Mw/Mn: 2.1; melt flow ratio ($I_{10}/I_2$): 7.6) produced in the presence of a single site catalyst was used as it was.

Comparative Example 6:

An ethylene-propylene-nonconjugated diene copolymer (iodine value: 12.5; propylene content: 24% by weight; diene component: ethylidene norbornene; Mooney viscosity: 60; density: 0.86 g/cm$^3$; Mw/Mn: 6.3) produced in the absence of single site catalyst was used as it was instead of the ethylene-octene copolymer.

Production Example: Aromatic vinyl resin (ABS)

210 parts of water, 2 parts of sodium dioctylsulfo succinate, 0.5 parts of sodium formaldehyde sulfoxylate, 0.01 parts of disodium ethylenediamine tetraacetate, and 0.0025 parts of ferrous sulfate were charged into a polymerizer equipped with an agitator and a condenser in an atmosphere of nitrogen where 78 parts of styrene and 22 parts of acrylonitrile were then continuously added dropwise thereto with paramenthane hydroperoxide as a polymerization initiator and t-dodecyl mercaptan as a chain transfer agent at a polymerization temperature of 65°C in 6 hours. After the termination of dropwise addition, the polymerization mixture was further stirred at a temperature of 65°C for 2 hours to terminate polymerization. Thus, an aromatic vinyl resin (AVI) latex was obtained.

Separately, 240 parts of water, 80 parts of polybutadiene latex, 0.2 parts of sodium formaldehyde sulfoxylate, 0.012 parts of disodium ethylenediamine tetraacetate, and 0.003 parts of ferrous sulfate were charged into a polymerizer equipped with an agitator and a condenser in an atmosphere of nitrogen where 23 parts of styrene and 7 parts of acrylonitrile were then continuously added dropwise thereto with t-butylperoxyisopropyl carbonate as a polymerization initiator at a polymerization temperature of 60°C in 4 hours. After the termination of dropwise addition, the polymerization

mixture was further stirred at a temperature of 60°C for 2 hours to terminate polymerization. Thus, an aromatic vinyl resin (AV2) latex was obtained.

The two latexes thus obtained were mixed at an AV1/AV2 ratio of 3/1, salted out, dehydrated, and then dried to obtain an aromatic vinyl resin (ABS).

(Evaluation of graft-modified polyolefinic resin)

The graft-modified polyolefinic resins (GPO1 - GPO12) obtained in Examples 1 to 6, 48 and 49 and Comparative Examples 1 to 4 and the unmodified polyolefinic resins obtained in Comparative Examples 5 and 6 were evaluated for various physical properties as follows.

(1) Capillary melt viscosity:

The capillary melt viscosity was measured at a temperature of 250°C. For the measurement of the capillary melt viscosity, a capillograph available from Toyo Seiki Seisakusho, Ltd. was used. The measurement was effected at a residence time of 5 minutes and a shear rate of 1,216/sec.

(2) Molding fluidity:

For the evaluation of molding fluidity, the various samples were each injection-molded through an injection molding machine (IS80EPN-2A, available from Toshiba Corp.) at a cylinder temperature of 200°C and a mold temperature of 50°C.

○: Excellent in molding fluidity;
△: Slightly poor in molding fluidity;
X: Poor in molding fluidity

(3) Adhesivity:

The sample was uniformly positioned interposed between two sheets of aluminum substrates. The sample was then compressed at a temperature of 200°C for 5 minutes to prepare a specimen. The aluminum substrate was then peeled off the sample to evaluate adhesivity.

○: Excellent in adhesivity;
△: Slightly poor in adhesivity;
X: Poor in adhesivity

The results of evaluation of properties are set forth in Table 1. The results in Table 1 show that the graft-modified polyolefinic resins according to the present invention exhibit an excellent adhesivity and further exhibit an excellent fluidity despite of the presence of an epoxy group.

Table 1

| Example No. | | Properties of graft-modified polyolefinic resin | | |
|---|---|---|---|---|
| | | Melt viscosity (poise) | Molding fluidity | Adhesivity |
| Example Nos. | | | | |
| 1 | GPO1 | 2,020 | ○ | ○ |
| 2 | GPO2 | 1,900 | ○ | ○ |
| 3 | GPO3 | 2,800 | ○ | ○ |
| 4 | GPO4 | 1,930 | ○ | ○ |
| 5 | GPO5 | 1,820 | ○ | ○ |
| 6 | GPO6 | 1,880 | ○ | ○ |
| 48 | GPO11 | 1,910 | ○ | ○ |
| 49 | GPO12 | 3,043 | ○ | ○ |
| Comparative Example Nos. | | | | |
| 1 | GPO7 | 7,110 | X | ○ |
| 2 | GPO8 | 11,400 | X | ○ |
| 3 | GPO9 | 3,500 | △ | △ |
| 4 | GPO10 | 3,360 | △ | △ |
| 5 | EOC | 1,515 | ○ | X |
| 6 | EPDM | 5,167 | X | X |

(Production of thermoplastic resin composition)

Examples 7 to 15 and Comparative Examples 7 to 13:

A polybutylene terephthalate resin (Duranex 2002®, available from Polyplastics Co., Ltd.; abbreviated as "PBT"), the graft-modified polyolefinic resins (GPO1 to GPO10) or unmodified polyolefinic resins obtained in Examples 1 to 6 and Comparative Examples 1 to 4, tetrabutyl phosphonium bromide (available from Aldrich Co., Ltd.; abbreviated as "TBPB") as a catalyst, and glass fiber (ECSO3T-195H/PS®, available from Nippon Electric Glass Co., Ltd.) were mixed in a proportion set forth in Table 2. The mixture was charged at a rate of 15 kg per hour into a 45-mm twin screw extruder (TEX44SS®, available from The Japan Steel Works, Ltd.) which had been adjusted to a temperature of 240°C where it was then melt-kneaded at a screw rotational speed of 100 rpm. The material thus extruded was cooled with water, pelletized, and then dried at a temperature of 120°C for 4 hours to produce a resin composition.

Examples 16 to 23 and Comparative Examples 14 to 20:

A polybutylene terephthalate resin (Duranex 2000®, available from Polyplastics Co., Ltd.; abbreviated as "PBT"), a polypropylene resin (Hipole J900®, available from Mitsui Petrochemical Industries, Ltd.), the graft-modified polyolefinic resins (GPO1 to GPO10) or unmodified polyolefinic resins obtained in Examples 1 to 6 and Comparative Examples 1 to 4, and tetrabutyl phosphonium bromide (available from Aldrich Co., Ltd.; abbreviated as "TBPB") as a catalyst were mixed in a proportion set forth in Table 3. The mixture was charged at a rate of 15 kg per hour into a 45-mm twin screw extruder (TEX44SS®, available from The Japan Steel Works, Ltd.) which had been adjusted to a temperature of 240°C where it was then melt-kneaded at a screw rotational speed of 100 rpm. The material thus extruded was cooled with water, pelletized, and then dried at a temperature of 120°C for 4 hours to produce a resin composition.

Examples 24 to 31 and Comparative Examples 21 to 26:

A nylon-6 resin (UBE1013B, available from Ube Industries, Ltd.), the graft-modified polyolefinic resins (GPO1 to GPO10) or unmodified polyolefinic resins obtained in Examples 1 to 6 and Comparative Examples 1 to 4, and tetrabutyl

phosphonium bromide (available from Aldrich Co., Ltd.; abbreviated as "TBPB") as a catalyst were mixed in a proportion set forth in Table 4. The mixture was charged at a rate of 15 kg per hour into a 45-mm twin screw extruder (TEX44SS®, available from The Japan Steel Works, Ltd.) which had been adjusted to a temperature of 250°C where it was then melt-kneaded at a screw rotational speed of 100 rpm. The material thus extruded was cooled with water, pelletized, and then dried at a temperature of 120°C under reduced pressure for 12 hours to produce a resin composition.

Examples 32 to 39 and Comparative Examples 27 to 32:

A polybutylene terephthalate resin (Duranex 800FP®, available from Polyplastics Co., Ltd.; abbreviated as "PBT"), a nylon-66 resin (UBE2020B, available from Ube Industries, Ltd.), the graft-modified polyolefinic resins (GPO1 to GPO10) or unmodified polyolefinic resins obtained in Examples 1 to 6 and Comparative Examples 1 to 4, and tetrabutyl phosphonium bromide (available from Aldrich Co., Ltd.; abbreviated as "TBPB") as a catalyst were mixed in a proportion set forth in Table 5. The mixture was charged at a rate of 15 kg per hour into a 45-mm twin screw extruder (TEX44SS®, available from The Japan Steel Works, Ltd.) which had been adjusted to a temperature of 250°C where it was then melt-kneaded at a screw rotational speed of 100 rpm. The material thus extruded was cooled with water, pelletized, and then dried at a temperature of 120°C under reduced pressure for 12 hours to produce a resin composition.

Examples 40 to 47 and Comparative Examples 31 to 36:

A polycarbonate resin (Panlite L-1250®, available from Teijin Ltd.), and the graft-modified polyolefinic resins (GPO1 to GPO10) or unmodified polyolefinic resins obtained in Examples 1 to 6 and Comparative Examples 1 to 4 were mixed in a proportion set forth in Table 6. The mixture was charged at a rate of 15 kg per hour into a 45-mm twin screw extruder (TEX44SS®, available from The Japan Steel Works, Ltd.) which had been adjusted to a temperature of 280°C where it was then melt-kneaded at a screw rotational speed of 100 rpm. The material thus extruded was cooled with water, pelletized, and then dried at a temperature of 120°C under reduced pressure for 12 hours to produce a resin composition.

Examples 50 to 52 and Comparative Examples 37 to 40:

A polycarbonate resin (Toughlon A2200®, available from Idemitsu Petrochemical Co., Ltd.), the graft-modified polyolefinic resins (GPO11 to GPO12) or unmodified polyolefinic resins obtained in Examples 48 and 49, and the aromatic vinyl resin (ABS) obtained in the foregoing production examples were mixed in a proportion set forth in Table 7. The mixture was charged at a rate of 15 kg per hour into a 45-mm twin screw extruder (TEX44SS®, available from The Japan Steel Works, Ltd.) which had been adjusted to a temperature of 240°C where it was then melt-kneaded at a screw rotational speed of 100 rpm. The material thus extruded was cooled with water, pelletized, and then dried at a temperature of 120°C under reduced pressure for 12 hours to produce a resin composition.

(Evaluation of thermoplastic resin composition)

(1) Tensile elongation at break:

The resin compositions obtained in Examples 7 to 23 and Comparative Examples 7 to 20, the resin compositions obtained in Examples 24 to 39 and Comparative Examples 21 to 32 and the resin compositions obtained in Examples 40 to 47 and Comparative Examples 31 to 36 were injection-molded at a cylinder temperature of 240°C, 250°C and 280°C, respectively, and a mold temperature of 50°C, 60°C and 80°C, respectively, through an injection molding machine (IS80EPN-2A, available from Toshiba Corp.) to prepare dumbbells. These dumbbell specimens were then evaluated for 23°C tensile elongation at break in accordance with ASTM D638.

(2) Weld elongation at break:

A dumbbell specimen having a welded portion was prepared under the foregoing injection molding conditions. This specimen was then evaluated for 23°C weld tensile elongation at break in accordance with ASTM D638.

(3) Izod impact strength:

Izod bars having a thickness of 1/4 in. and 1/8 in., respectively, were prepared under the foregoing injection molding conditions. In some detail, the resin compositions (Table 7) obtained in Examples 50 to 52 and Comparative Examples 37 to 40 were processed at a cylinder temperature of 250°C and a mold temperature of 70°C to prepare specimens.

Further, the resin compositions (Tables 2 to 5, Table 7) obtained in Examples 7 to 39 and 50 to 52 and Comparative Examples 7 to 32 and 37 to 40 were processed under the foregoing injection molding conditions to prepare 1/4 in. bars. The resin compositions (Table 6) obtained in Examples 40 to 47 and Comparative Examples 31 to 36 were processed under the foregoing injection molding conditions to prepare 1/4 in. and 1/8 bars. These specimens were then evaluated for 23°C and - 30°C V-notched Izod impact strength in accordance with ASTM D256. The resin compositions (Table 7) obtained in Examples 50 to 52 and Comparative Examples 37 to 40 were examined for 23°C Izod impact strength.

(4) Capillary melt viscosity:

The resin compositions (Tables 2 and 3) obtained in Examples 7 to 23 and Comparative Examples 7 to 20 were measured for capillary melt viscosity at 250°C by means of a capillograph available from Toyo Seiki Seisakusho, Ltd. The measurement of capillary melt viscosity was effected at a residence time of 5 minutes and a shear rate of 1,216/sec.

(5) Molding fluidity:

The resin composition was injection-molded into a rectangular spiral having a thickness of 3 mm under the foregoing injection molding conditions. The length (mm) of the rectangular spiral thus prepared was then determined to evaluate the molding fluidity of the resin composition. For the measurement of the fluidity of the resin compositions (Table 7) obtained in Examples 50 to 52 and Comparative Examples 37 to 40, a round spiral having a thickness of 3 mm was used.

(6) Surface peelability:

The resin composition was processed in a mold having a pin gate diameter of 0.8 mm and a thickness of 2 mm under the foregoing injection molding conditions to prepare a specimen. The specimens prepared from the resin compositions (Tables 3, 7) obtained in Examples 16 to 23 and 50 to 52 and Comparative Examples 14 to 20 and 37 to 40 were evaluated for surface peelability in accordance with the cross-cut adhesion test described in JIS K5400 (coating). The criterion for evaluation of surface peelability is as follows:

◎: 96 or more out of 100 checkers in total left unpeeled after test;
○: 91 to 95 out of 100 checkers in total left unpeeled after test;
△: 86 to 90 out of 100 checkers in total left unpeeled after test; and
X: 85 or less out of 100 checkers in total left unpeeled after test

(7) Heat shock resistance:

The resin composition was processed in a mold having a thickness of 1 mm under the foregoing injection molding conditions to prepare a specimen having a welded portion. The specimens prepared from the resin compositions (Table 2) obtained in Examples 7 to 15 and Comparative Examples 7 to 13 were annealed at a temperature of 140°C for 2 hours, and then subjected to 50 heat cycles at - 30°C and 140°C. When the 50th cycle was terminated, the number of specimens showing crack on the welded portion out of 10 specimens in total was determined to evaluate the heat shock resistance of the resin composition. The criterion for evaluation is as follows:

○: 2 or less out of 10 specimens show cracking on welded portion;
△: 3 to 5 out of 10 specimens show cracking on welded portion; and
X: 6 or more out of 10 specimens show cracking on welded portion

The results of evaluation of properties are set forth in Tables 2 to 7.

Table 2

| Example No. | Mixing ratio of composition | | | | | Properties of resin composition | | | | | | |
|---|---|---|---|---|---|---|---|---|---|---|---|---|
| | | | | | | % Tensile elongation at break | | Izod impact strength (kg•cm/cm) | | Capillary melt viscosity | Molding fluidity | Heat shock resistance |
| | PBT | GPO | Type | TBPB | GF | Unwelded | Welded | 23°C | -30°C | (poise) | (mm) | |
| Example 7 | 95 | 5 | GPO1 | 0.10 | - | 34.7 | 52.1 | 10.2 | 6.1 | 2,080 | 123 | O |
| 8 | 90 | 10 | GPO1 | 0.09 | - | 105.3 | 138.7 | 15.1 | 7.8 | 2,500 | 104 | O |
| 9 | 60 | 10 | GPO1 | 0.06 | 30 | 5.6 | 4.2 | 14.9 | 12.7 | 2,620 | 78 | O |
| 10 | 95 | 5 | GPO2 | 0.10 | - | 30.4 | 53.9 | 9.3 | 5.9 | 1,853 | 140 | O |
| 11 | 90 | 10 | GPO2 | 0.09 | - | 82.6 | 105.2 | 13.4 | 7.5 | 1,910 | 137 | O |
| 12 | 90 | 10 | GPO3 | 0.09 | - | 44.7 | 92.1 | 16.2 | 8.0 | 2,620 | 105 | O |
| 13 | 90 | 10 | GPO4 | 0.09 | - | 38.0 | 63.2 | 12.0 | 7.4 | 2,540 | 100 | O |
| 14 | 90 | 10 | GPO5 | 0.09 | - | 40.2 | 75.9 | 14.3 | 7.8 | 2,470 | 119 | O |
| 15 | 90 | 10 | GPO6 | 0.09 | - | 35.7 | 52.9 | 11.1 | 7.0 | 2,333 | 115 | O |

Table 2 (cont'd.)

| Comp. Example | | | | | | | | | | | | |
|---|---|---|---|---|---|---|---|---|---|---|---|---|
| 7 | 90 | 10 | (EOC) | - | - | 78.9 | 8.2 | 7.0 | 4.1 | 1,800 | 138 | X |
| 8 | 90 | 10 | (EPDM) | - | - | 32.5 | 2.9 | 6.6 | 3.9 | 2,030 | 140 | X |
| 9 | 90 | 10 | GOP7 | 0.09 | - | 65.3 | 3.6 | 12.1 | 6.8 | 2,870 | 93 | X |
| 10 | 90 | 10 | GPO8 | 0.09 | - | 12.7 | 20.1 | 6.3 | 4.2 | 3,108 | 84 | O |
| 11 | 60 | 10 | GPO8 | 0.06 | 30 | 3.2 | 2.6 | 11.2 | 9.8 | 3,200 | 59 | O |
| 12 | 90 | 10 | GPO9 | 0.09 | - | 21.0 | 5.4 | 12.5 | 7.3 | 2,520 | 95 | X |
| 13 | 90 | 10 | GPO10 | 0.09 | - | 16.2 | 4.8 | 10.3 | 4.7 | 2,670 | 90 | X |

EOC: Unmodified ethylene-octene copolymer (EG8200, available from The Dow Chemical Company)

EPDM: Unmodified ethylene-propylene-nonconjugated diene copolymer (TER4033, available from Enichem Japan Limited)

Table 3

| Example No. | Mixing ratio of composition | | | | | Properties of resin composition | | | | |
|---|---|---|---|---|---|---|---|---|---|---|
| | PBT | PP | GPO | TYPE | TBPB | % Tensile elongation at break | | Capillary melt viscosity (poise) | Molding fluidity (mm) | Surface peelability |
| | | | | | | Unwelded | Welded | | | |
| Example 16 | 70 | 20 | 10 | GPO1 | 0.07 | 24.6 | 7.0 | 1,230 | 211 | ◎ |
| 17 | 70 | 15 | 15 | GPO1 | 0.07 | 38.5 | 10.4 | 1,321 | 196 | ◎ |
| 18 | 70 | 20 | 10 | GPO2 | 0.07 | 20.2 | 8.0 | 1,176 | 236 | ◎ |
| 19 | 70 | 15 | 15 | GPO2 | 0.07 | 36.0 | 10.2 | 1,236 | 215 | ◎ |
| 20 | 70 | 15 | 15 | GPO3 | 0.07 | 32.3 | 8.6 | 1,304 | 199 | ◎ |
| 21 | 70 | 15 | 15 | GPO4 | 0.07 | 29.3 | 9.6 | 1,266 | 205 | ○ |
| 22 | 70 | 15 | 15 | GPO5 | 0.07 | 22.0 | 9.7 | 1,270 | 202 | ◎ |
| 23 | 70 | 15 | 15 | GPO6 | 0.07 | 27.3 | 7.2 | 1,289 | 211 | ○ |
| Comp. Example 14 | 70 | 30 | | - | - | 1.2 | 1.0 | 1,140 | 218 | X |
| 15 | 70 | 15 | 15 | (EOC) | | 5.2 | 1.5 | 1,203 | 210 | X |
| 16 | 70 | 15 | 15 | (EPDM) | | 3.4 | 1.2 | 1,352 | 192 | X |
| 17 | 70 | 15 | 15 | GPO7 | 0.07 | 33.4 | 2.3 | 1,765 | 155 | X |
| 18 | 70 | 15 | 15 | GPO8 | 0.07 | 2.9 | 2.5 | 1,526 | 168 | X |
| 19 | 70 | 15 | 15 | GPO9 | 0.07 | 20.4 | 1.8 | 1,512 | 170 | X |
| 20 | 70 | 15 | 15 | GPO10 | 0.07 | 18.0 | 1.5 | 1,390 | 200 | X |

EOC: Unmodified ethylene-octene copolymer (EG8200, available from the The Dow Chemical Company)
EPDM: Unmodified ethylene-propylene-nonconjugated diene copolymer (TER4033, available from Enichem Japan Limited)

Table 4

| Example No. | Mixing ratio of composition | | | | Properties of resin composition | | | | |
|---|---|---|---|---|---|---|---|---|---|
| | Ny6 | GPO | Type | TBPB | % Tensile elongation at break | | Izod impact strength (kg • cm/cm) | | Molding fluidity (mm) |
| | | | | | Unwelded | Welded | 23°C | - 30°C | |
| Example 24 | 95 | 5 | GPO1 | 0.10 | 45.4 | 32.0 | 7.3 | 4.2 | 168 |
| 25 | 90 | 10 | GPO1 | 0.09 | 56.3 | 29.3 | 10.0 | 5.2 | 149 |
| 26 | 95 | 5 | GPO2 | 0.10 | 40.5 | 29.6 | 7.4 | 4.9 | 189 |

Table 4 (continued)

| Example No. | Mixing ratio of composition | | | | Properties of resin composition | | | | |
|---|---|---|---|---|---|---|---|---|---|
| | Ny6 | GPO | Type | TBPB | % Tensile elongation at break | | Izod impact strength (kg • cm/cm) | | Molding fluidity (mm) |
| | | | | | Unwelded | Welded | 23°C | - 30°C | |
| 27 | 90 | 10 | GPO2 | 0.09 | 81.2 | 30.5 | 10.9 | 3.8 | 175 |
| 28 | 90 | 10 | GPO3 | 0.09 | 58.5 | 28.8 | 9.9 | 3.4 | 153 |
| 29 | 90 | 10 | GPO4 | 0.09 | 45.4 | 31.8 | 8.7 | 4.7 | 154 |
| 30 | 90 | 10 | GPO5 | 0.09 | 43.2 | 25.5 | 8.5 | 3.3 | 168 |
| 31 | 90 | 10 | GPO6 | 0.09 | 40.1 | 29.0 | 7.9 | 4.2 | 165 |
| Comp. Example 21 | 90 | 10 | (EOC) | - | 39.5 | 3.5 | 4.9 | 2.6 | 172 |
| 22 | 90 | 10 | (EPDM) | - | 13.2 | 2.5 | 4.1 | 3.6 | 176 |
| 23 | 90 | 10 | GPO7 | 0.09 | 40.4 | 4.4 | 7.4 | 3.9 | 121 |
| 24 | 90 | 10 | GPO8 | 0.09 | 18.4 | 15.9 | 3.7 | 3.2 | 127 |
| 25 | 90 | 10 | GPO9 | 0.09 | 23.2 | 6.8 | 7.3 | 3.6 | 135 |
| 26 | 90 | 10 | GPO10 | 0.09 | 22.7 | 5.3 | 6.1 | 3.9 | 145 |

EOC: Unmodified ethylene-octene copolymer (EG8200, available from The Dow Chemical Company)
EPDM: Unmodified ethylene-propylene-nonconjugated diene copolymer (TER4033, available from Enichem Japan Limited)

Table 5

| Example No. | Mixing ratio of composition | | | | | Properties of resin composition | | | | |
|---|---|---|---|---|---|---|---|---|---|---|
| | PBT | Ny 66 | GPO | TYPE | TBPB | % Tensile elongation at break | | Izod impact strength (kg • cm/cm) | | Molding fluidity (mm) |
| | | | | | | Unwelded | Welded | 23°C | - 30°C | |
| Example 32 | 70 | 30 | 5 | GPO1 | 0.07 | 10.2 | 5.3 | 8.0 | 3.4 | 115 |
| 33 | 70 | 30 | 10 | GPO1 | 0.07 | 12.8 | 8.4 | 12.3 | 4.9 | 94 |
| 34 | 70 | 30 | 5 | GPO2 | 0.07 | 11.6 | 6.4 | 7.7 | 3.6 | 128 |
| 35 | 70 | 30 | 10 | GPO2 | 0.07 | 12.4 | 8.7 | 11.2 | 5.2 | 120 |
| 36 | 70 | 30 | 10 | GPO3 | 0.07 | 12.0 | 8.3 | 11.6 | 5.3 | 91 |
| 37 | 70 | 30 | 10 | GPO4 | 0.07 | 11.9 | 8.0 | 12.0 | 5.0 | 92 |
| 38 | 70 | 30 | 10 | GPO5 | 0.07 | 11.0 | 7.2 | 10.8 | 5.0 | 122 |
| 39 | 70 | 30 | 10 | GPO6 | 0.07 | 11.2 | 7.8 | 11.8 | 5.2 | 106 |

Table 5 (continued)

| Example No. | Mixing ratio of composition | | | | | Properties of resin composition | | | | |
|---|---|---|---|---|---|---|---|---|---|---|
| | PBT | Ny 66 | GPO | TYPE | TBPB | % Tensile elongation at break | | Izod impact strength (kg • cm/cm) | | Molding fluidity (mm) |
| | | | | | | Unwelded | Welded | 23°C | - 30°C | |
| Comp. Example 27 | 70 | 30 | 10 | (EOC) | - | 7.0 | 1.8 | 4.1 | 1.8 | 125 |
| 28 | 70 | 30 | 10 | (EPDM) | - | 8.3 | 1.3 | 3.0 | 2.0 | 120 |
| 29 | 70 | 30 | 10 | GPO7 | 0.07 | 11.4 | 2.1 | 9.0 | 4.5 | 85 |
| 30 | 70 | 30 | 10 | GPO8 | 0.07 | 9.3 | 4.5 | 6.5 | 3.7 | 76 |
| 31 | 70 | 30 | 10 | GPO9 | 0.07 | 11.3 | 3.5 | 9.2 | 4.2 | 84 |
| 32 | 70 | 30 | 10 | GPO10 | 0.07 | 10.1 | 3.6 | 8.4 | 2.9 | 92 |

EOC: Unmodified ethylene-octene copolymer (EG8200, available from The Dow Chemical Company)
EPDM: Unmodified ethylene-propylene-nonconjugated diene copolymer (TER4033, available from Enichem Japan Limited)

Table 6

| Example No. | Mixing ratio of composition | | | | Properties of resin composition | | | | | | |
|---|---|---|---|---|---|---|---|---|---|---|---|
| | PC | GPO | TYPE | TBPB | % Tensile elongation at break | | Izod impact strength (kg • cm/cm) | | | | Molding fluidity (mm) |
| | | | | | Unwelded | Welded | 23°C | | - 30°C | | |
| | | | | | | | 1/4* | 1/8* | 1/4* | 1/8* | |
| Example 40 | 95 | 5 | GPO1 | - | 81.2 | 50.2 | 64.1 | 66.0 | 25.6 | 39.3 | 143 |
| 41 | 90 | 10 | GPO1 | - | 102.7 | 87.8 | 69.8 | 70.7 | 34.3 | 53.5 | 122 |
| 42 | 95 | 5 | GPO2 | - | 69.3 | 47.5 | 60.6 | 63.1 | 26.1 | 44.9 | 155 |
| 43 | 90 | 10 | GPO2 | - | 105.1 | 100.2 | 69.3 | 71.3 | 30.9 | 51.5 | 138 |
| 44 | 90 | 10 | GPO3 | - | 98.9 | 75.9 | 62.0 | 64.2 | 24.9 | 50.7 | 115 |
| 45 | 90 | 10 | GPO4 | - | 97.6 | 80.4 | 66.8 | 69.3 | 22.6 | 41.3 | 121 |
| 46 | 90 | 10 | GPO5 | - | 80.2 | 62.4 | 58.8 | 61.9 | 21.8 | 47.2 | 120 |
| 47 | 90 | 10 | GPO6 | - | 81.3 | 60.3 | 59.2 | 70.1 | 22.0 | 42.5 | 124 |
| Comp. Example 31 | | | | | | | | | | | |
| 32 | 90 | 10 | (EOC) | - | 104.9 | 24.3 | 19.0 | 32.2 | 8.0 | 13.4 | 148 |
| 33 | 90 | 10 | (EPDM) | - | 59.1 | 9.7 | 16.1 | 29.3 | 8.8 | 12.6 | 130 |
| 34 | 90 | 10 | GPO7 | - | 69.3 | 10.3 | 45.0 | 46.4 | 25.0 | 40.9 | 109 |
| 35 | 90 | 10 | GPO8 | - | 53.5 | 32.5 | 30.1 | 40.7 | 19.1 | 20.9 | 82 |
| 36 | 90 | 10 | GPO9 | - | 104.0 | 28.8 | 50.3 | 54.5 | 25.6 | 44.3 | 106 |
| | 90 | 10 | GPO10 | - | 88.7 | 23.1 | 46.9 | 49.8 | 23.0 | 18.7 | 110 |

EOC: Unmodified ethylene-octene copolymer (EG8200, available from The Dow Chemical Company)
EPDM: Unmodified ethylene-propylene-nonconjugated diene copolymer (TER4033, available from Enichem Japan Limited)

"*": inch.

Table 7

| Example No. | Mixing ratio of composition | | | | | Properties of resin composition | | |
|---|---|---|---|---|---|---|---|---|
| | PC | ABS | GPO | TYPE | TBPB | Izod impact strength (kg • cm/cm) | Surface peelability | Molding fluidity (mm) |
| Example 50 | 50 | 50 | 5 | GPO11 | - | 70.3 | ◎ | 639 |
| 51 | 60 | 40 | 10 | GPO11 | - | 63.8 | ◎ | 624 |
| 52 | 60 | 40 | 5 | GPO12 | - | 61.0 | ◎ | 618 |

Table 7 (continued)

| Example No. | Mixing ratio of composition | | | | | Properties of resin composition | | |
|---|---|---|---|---|---|---|---|---|
| | PC | ABS | GPO | TYPE | TBPB | Izod impact strength (kg • cm/cm) | Surface peelability | Molding fluidity (mm) |
| Comp. Example 37 | 50 | 50 | | - | - | 55.0 | X | 558 |
| 38 | 60 | 40 | | - | - | 53.8 | X | 551 |
| 39 | 50 | 50 | 5 | EOC | - | 54.7 | X | 580 |
| 40 | 60 | 40 | 10 | EPDM | - | 53.5 | X | 554 |

EOC: Unmodified ethylene-octene copolymer (EG8100, available from The Dow Chemical Company)
EPDM: Unmodified ethylene-propylene-nonconjugated diene copolymer (TER4033, available from Enichem Japan Limited)

The results in Table 2 show that the resin compositions according to the present invention obtained in Examples 7 to 15 exhibit an extremely high tensile elongation at break regardless of whether or not they have a welded portion and good Izod impact strength and fluidity. It can also be seen that these resin compositions exhibit an excellent heat shock resistance. On the other hand, the resin compositions of Comparative Examples 7 and 8, which are products unmodified with a glycidyl group-containing compound, exhibit a poor compatibility with polybutylene terephthalate and thus show no improvement in weldability and heat shock resistance. Further, the resin compositions of Comparative Examples 9 to 13 leave something to be desired in weldability, fluidity or heat shock resistance. It is thus obvious that the resin compositions according to the present invention are well-balanced in physical properties such as weldability, impact resistance, fluidity and heat shock resistance.

The results in Table 3 show that the resin compositions according to the present invention obtained in Examples 16 to 23 exhibit an excellent weldability and a good fluidity despite the incorporation of polypropylene as an unmodified polyolefinic resin. Further, these resin compositions exhibit an excellent surface peelability. It can thus be seen that the graft-modified polyolefinic resins (GPO1 to GPO6) of the present invention can remarkably act as a compatibilizer to improve the compatibility of resins. On the other hand, the resin compositions of the comparative examples cannot improve the compatibility of polybutylene terepthalate resin and polypropylene resin, which inherently are insufficiently compatible with each other, and thus exhibit poor weldability and surface peelability.

The results in Table 4 show that the resin compositions obtained in Examples 24 to 31 are excellent particularly in weldability and exhibit good impact resistance and fluidity. The resin compositions of the comparative examples showed no improvement in weldability.

The results in Table 5 show that the resin compositions obtained in Examples 32 to 39 exhibit good weldability, impact resistance and fluidity even if polyester and polyamide which have a poor compatibility therewith are incorporated therein. In particular, the weldability and fluidity of these resin compositions are remarkably excellent. The resin compositions of the comparative examples exert an insufficient effect of improving the compatibility with the resin and thus show a poor weldability.

The results in Table 6 show that the resin compositions according to the present invention obtained in Examples 40 to 47 exhibit excellent weldability, impact resistance and fluidity. In particular, the dependence of impact strength of the resin compositions according to the present invention on thickness, which comes into question with polycarbonate resin, is small. Thus, the resin compositions according to the present invention are also adapted for parts having a great thickness. On the other hand, the resin compositions of the comparative examples show a great dependence of impact strength on thickness and thus exhibit a poor weldability.

The results in Table 7 show that the resin compositions according to the present invention obtained in Examples 50 to 52 show a drastic improvement in surface peeling resistance and good impact resistance and molding fluidity. On the other hand, the resin compositions of the comparative examples exhibit an insufficient compatibility of polycarbonate resin with aromatic vinyl resin that causes violent surface peeling and show poor impact resistance and molding fluidity.

## INDUSTRIAL APPLICABILITY

As mentioned above, the resin compositions according to the present invention show a drastic improvement in fluidity and weldability and show a well-balanced impact resistance. The resin compositions according to the present

invention can be used as various engineer plastics, particularly for automobile parts, household appliance parts, industrial parts, sports goods, furniture, etc.

**Claims**

1. A graft-modified polyolefinic resin, which is produced by the polymerization of (a-1) 100 parts by weight of a polyolefinic resin prepared in the presence of a single site catalyst with (a-2) from 0.1 to 30 parts by weight of a compound (a-2a) containing a glycidyl group represented by the following formula (I):

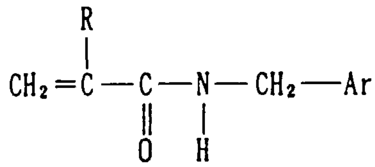

(I)

wherein Ar represents a $C_{6\text{-}23}$ aromatic hydrocarbon group bonded to at least one glycidyloxy group; and R represents a hydrogen atom or a methyl group and/or a compound (a-2b) containing a glycidyl group composed of an unsaturated glycidyl ester in the presence of (a-4) a radical polymerization initiator in an amount of from 0.001 to 10 parts by weight based on 100 parts by weight of said component (a-2).

2. A graft-modified polyolefinic resin, which is produced by the polymerization of (a-1) 100 parts by weight of a polyolefinic resin prepared in the presence of a single site catalyst with (a-2) from 0.1 to 30 parts by weight of a compound (a-2a) containing a glycidyl group represented by the following formula (I):

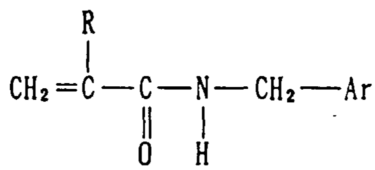

(I)

wherein Ar represents a $C_{6\text{-}23}$ aromatic hydrocarbon group bonded to at least one glycidyloxy group; and R represents a hydrogen atom or a methyl group and/or a compound (a-2b) containing a glycidyl group composed of an unsaturated glycidyl ester and (a-3) from 1 to 500 parts by weight of a vinyl monomer in the presence of (a-4) a radical polymerization initiator in an amount of from 0.001 to 10 parts by weight based on 100 parts by weight of the sum of the weight of said components (a-2) and (a-3).

3. The graft-modified polyolefinic resin according to Claim 1 or 2, wherein the molecular weight distribution (Mw/Mn) represented by the ratio of weight-average molecular weight (Mw) to number-average molecular weight (Mn) of the polyolefinic resin (a-1) is not more than 3.5.

4. The graft-modified polyolefinic resin according to Claim 3, wherein the molecular weight distribution (Mw/Mn) represented by the ratio of weight-average molecular weight (Mw) to number-average molecular weight (Mn) of the polyolefinic resin (a-1) is from 1.5 to 2.5.

5. The graft-modified polyolefinic resin according to any one of Claims 1 to 4, wherein the melt flow ratio ($I_{10}/I_2$) of the polyolefinic resin (a-1) is not less than 5.63 and the molecular weight distribution (Mw/Mn) of the polyolefinic resin (a-1) is represented by the following formula (II):

$$Mw/Mn \leq (I_{10}/I_2) - 4.63 \qquad \text{(II)}$$

6. The graft-modified polyolefinic resin according to any one of Claims 1 to 5, wherein the density of the polyolefinic resin (a-1) is not more than 0.95 $g/cm^3$.

7. The graft-modified polyolefinic resin according to Claim 6, wherein the density of the polyolefinic resin (a-1) is not

more than 0.88 g/cm$^3$.

8. The graft-modified polyolefinic resin according to any one of Claims 1 to 7, wherein the polyolefinic resin (a-1) is a copolymer of ethylene with a $C_{3-10}$ $\alpha$-olefin.

9. The graft-modified polyolefinic resin according to Claim 8, wherein the content of $\alpha$-olefin unit in the polyolefinic resin (a-1) is from 0.1 to 50% by weight.

10. The graft-modified polyolefinic resin according to Claim 9, wherein the content of $\alpha$-olefin unit in the polyolefinic resin (a-1) is from 20 to 35% by weight.

11. The graft-modified polyolefinic resin according to any one of Claims 8 to 10, wherein the polyolefinic resin (a-1) is a copolymer of ethylene with at least one $\alpha$-olefin selected from the group consisting of propylene, 1-butene, 1-hexene, 4-methyl-1-pentene and 1-octene.

12. The graft-modified polyolefinic resin according to Claim 11, wherein the polyolefinic resin (a-1) is a copolymer of ethylene with 1-octene.

13. The graft-modified polyolefinic resin according to any one of Claims 1 to 7, wherein the polyolefinic resin (a-1) is a terpolymer of ethylene with a $C_{3-10}$ $\alpha$-olefin and a nonconjugated diene.

14. The graft-modified polyolefinic resin according to Claim 13, wherein the polyolefinic resin (a-1) is a terpolymer of ethylene with propylene and a nonconjugated diene.

15. The graft-modified polyolefinic resin according to any one of Claims 1 to 14, wherein the single site catalyst comprises one or more catalyst compositions composed of a metal complex containing a ligand having one or more cyclopentadienyl skeletons and a cocatalyst.

16. The graft-modified polyolefinic resin according to Claim 15, wherein the metal complex contains a metal atom selected from the group consisting of titanium, zirconium and hafnium.

17. The graft-modified polyolefinic resin according to Claim 15, wherein the cocatalyst is an organic aluminum oxy compound or boron-based compound.

18. The graft-modified polyolefinic resin according to Claim 17, wherein the cocatalyst is methyl alumoxane or tris(pentafluorophenyl)boran.

19. The graft-modified polyolefinic resin according to any one of Claims 1 to 18, wherein the compound (a-2a) having a glycidyl group represented by the formula (I) as the component (a-2) is a compound represented by the following formula (III):

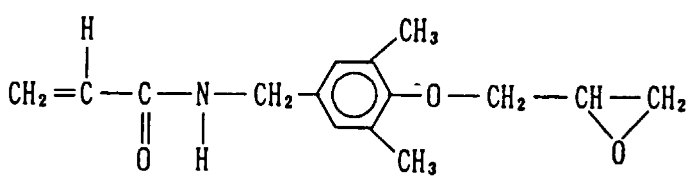

(III)

20. The graft-modified polyolefinic resin according to any one of Claims 1 to 18, wherein the compound (a-2b) having a glycidyl group composed of an unsaturated glycidyl ester as the component (a-2) is glycidyl methacrylate.

21. The graft-modified polyolefinic resin according to any one of Claim 1 to 18, wherein the component (a-2) is a mixture of 100 parts by weight of a compound represented by the following formula (III):

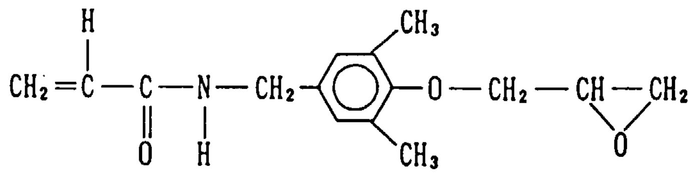

(III)

and from 1 to 1,000 parts by weight of glycidyl methacrylate.

**22.** The graft-modified polyolefinic resin according to any one of Claims 2 to 21, wherein the vinyl monomer (a-3) is at least one selected from the group consisting of aromatic vinyl compound, acrylic acid alkyl ester having a $C_{1\text{-}22}$ alkyl group, methacrylic acid alkyl ester having a $C_{1\text{-}22}$ alkyl group, vinyl alkyl ether having a $C_{1\text{-}22}$ alkyl group, vinyl alcohol, unsaturated nitrile compound, unsaturated amino compound, maleic acid dialkyl ester having a $C_{1\text{-}9}$ alkyl group, allyl alkyl ether having a $C_{1\text{-}8}$ alkyl group, diene compound, maleic anhydride, maleic acid, acrylic acid, methacrylic acid, and vinyl acetate.

**23.** The graft-modified polyolefinic resin according to Claim 22, wherein the vinyl monomer (a-3) is at least one selected from the group consisting of styrene, $\alpha$-methylstyrene, butyl acrylate, methyl methacrylate, allyl methacrylate, vinyl acetate and acrylonitrile.

**24.** The graft-modified polyolefinic resin according to Claim 1 or any one of Claims 3 to 21, produced by a process which comprises preparing an aqueous suspension containing a component (a-1) in an amount of 100 parts by weight, a component (a-2) in an amount of from 0.1 to 30 parts by weight and a component (a-4) in an amount of from 0.001 to 10 parts by weight based on 100 parts by weight of the component (a-2), and then allowing the component (a-1) to be impregnated with the component (a-2) in the aqueous suspension to effect polymerization of the component (a-2).

**25.** The graft-modified polyolefinic resin according to any one of Claims 2 to 23, produced by a process which comprises preparing an aqueous suspension containing a component (a-1) in an amount of 100 parts by weight, a component (a-2) in an amount of from 0.1 to 30 parts by weight, a component (a-3) in an amount of from 1 to 500 parts by weight, and a component (a-4) in an amount of from 0.001 to 10 parts by weight based on 100 parts by weight of the sum of the weight of the components (a-2) and (a-3), and then allowing the component (a-1) to be impregnated with the components (a-2) and (a-3) to effect polymerization of the components (a-2) and (a-3).

**26.** The graft-modified polyolefinic resin according to Claim 1 or any one of Claims 3 to 21, produced by a process which comprises melt-kneading a component (a-1) in an amount of 100 parts by weight, a component (a-2) in an amount of from 0.1 to 30 parts by weight, and a component (a-4) in an amount of from 0.001 to 10 parts by weight based on 100 parts by weight of the component (a-2), and then allowing the component (a-1) to be polymerized with the component (a-2).

**27.** The graft-modified polyolefinic resin according to any one of Claims 2 to 23, produced by a process which comprises melt-kneading a component (a-1) in an amount of 100 parts by weight, a component (a-2) in an amount of from 0.1 to 30 parts by weight, a component (a-3) in an amount of from 1 to 100 parts by weight, and a component (a-4) in an amount of from 0.001 to 10 parts by weight based on 100 parts by weight of the sum of the weight of the components (a-2) and (a-3), and then allowing the component (a-1) to be polymerized with the components (a-2) and (a-3).

**28.** A thermoplastic resin composition comprising (A) from 1 to 99% by weight of a graft-modified polyolefinic resin according to any one of Claims 1 to 27 and (B) from 1 to 99% by weight of at least one thermoplastic resin selected from the group consisting of polyester resin, polyamide resin and polycarbonate resin.

**29.** A thermoplastic resin composition, produced by blending (C) from 1 to 100 parts by weight of an unmodified polyolefinic resin in (D) 100 parts by weight of a thermoplastic resin composition according to Claim 28.

**30.** The resin composition according to Claim 29, wherein said unmodified polyolefinic resin (C) comprises at least one

selected from the group consisting of propylene homopolymer, propylene-ethylene copolymer, ethylene homopolymer, ethylene-propylene copolymer, ethylene-butene copolymer, ethylene-hexene copolymer, ethylene-octene copolymer, ethylene-propylene-nonconjugated diene copolymer, ethylene-vinyl acetate copolymer, and ethylene-ethyl acrylate copolymer.

**31.** The thermoplastic resin composition, produced by blending from 1 to 100 parts by weight of an aromatic vinyl resin in 100 parts by weight of a resin composition according to any one of Claims 28 to 30.

**32.** The resin composition according to Claim 31, wherein said aromatic vinyl resin is a resin obtained by the copolymerization of at least one compound selected from the group consisting of unsaturated aromatic compound, unsaturated cyan compound and unsaturated carboxylic acid ester compound in the presence or absence of a rubber polymer.

**33.** A resin composition, produced by blending (E) from 1 to 100 parts by weight of at least one filler selected from the group consisting of silica, talc, mica, glass fiber, neutral clay, carbon fiber, aromatic polyamide fiber, silicon carbide fiber, and titanate fiber in (D) 100 parts by weight of a resin composition according to any one of Claims 28 to 32.

## INTERNATIONAL SEARCH REPORT

International application No.
PCT/JP96/03591

**A. CLASSIFICATION OF SUBJECT MATTER**

Int. $Cl^6$ C08F255/00, 279/00, C08L51/00, 51/04, 23/00, 67/00, 69/00, 77/00

According to International Patent Classification (IPC) or to both national classification and IPC

**B. FIELDS SEARCHED**

Minimum documentation searched (classification system followed by classification symbols)

Int. $Cl^6$ C08F4/60-4/70, 251/00-292/00, C08L51/00-51/10, 23/00-23/36, 67/00-67/08, 69/00, 77/00-77/12

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 59-62613, A (Showa Denko K.K.), April 10, 1984 (10. 04. 84), Claim; page 4, upper right column, 6th line from the bottom to lower left column, 3rd line from the bottom (Family: none) | 1 - 33 |
| Y | JP, 1-236214, A (Sumitomo Chemical Co., Ltd.), September 21, 1989 (21. 09. 89), Claim; page 3, upper right column, lines 1 to 8 & EP, 317358, A1 | 1 - 33 |
| Y | JP, 63-254117, A (Copolymer Rubber & Chemical Corp.), October 20, 1988 (20. 10. 88), Claim & EP, 274744, A1 | 1 - 33 |
| Y | JP, 3-294317, A (Tonen Corp.), December 25, 1991 (25. 12. 91), Claim & EP, 450982, A2 | 1 - 33 |
| Y | JP, 3-296533, A (Tonen Corp.), | 1 - 33 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| February 12, 1997 (12. 02. 97) | February 25, 1997 (25. 02. 97) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No. PCT/JP96/03591

C (Continuation). DOCUMENTS CONSIDERED TO BE RELEVANT

| Category* | Citation of document, with indication, where appropriate, of the relevant passages | Relevant to claim No. |
|---|---|---|
| | December 27, 1991 (27. 12. 91), Claim (Family: none) | |
| Y | JP, 2-45510, A (Mitsui Petrochemical Industries, Ltd.), February 15, 1990 (15. 02. 90), Claim (Family: none) | 1 - 33 |
| Y | JP, 3-163088 (The Dow Chemical Co.), July 15, 1991 (15. 07. 91), Claim & EP, 416815, A2 | 1 - 33 |
| Y | JP, 60-35008, A (Exxon Research & Engineering Co.), February 22, 1985 (22. 02. 85), Claim & EP, 128045, A1 | 1 - 33 |
| Y | JP, 60-35007, A (Exxon Research & Engineering Co.), February 22, 1985 (22. 02. 85), Claim & EP, 129368, A1 | 1 - 33 |
| Y | JP, 60-35006, A (Exxon Research & Engineering Co.), February 22, 1985 (22. 02. 85), Claim & EP, 128046, A1 & US, 4937299, A | 1 - 33 |
| Y | JP, 63-280703, A (Mitsui Petrochemical Industries, Ltd.), November 17, 1988 (17. 11. 88), Claim & EP, 294942, A1 & US, 5126301, A | 1 - 33 |
| Y | JP, 58-19309, A (Hoechst AG.), February 4, 1983 (04. 02. 83), Claim & EP, 69951, A1 & US, 4542199, A | 1 - 33 |

Form PCT/ISA/210 (continuation of second sheet) (July 1992)